(19) Europäisches Patentamt
European Patent Office
Office européen des brevets

(11) EP 1 609 282 B1

(12) # EUROPEAN PATENT SPECIFICATION

(45) Date of publication and mention of the grant of the patent:
**13.05.2009 Bulletin 2009/20**

(21) Application number: **03724938.0**

(22) Date of filing: **28.03.2003**

(51) Int Cl.:
***H04L 27/26*** *(2006.01)* ***H04L 1/00*** *(2006.01)*

(86) International application number:
**PCT/EP2003/003284**

(87) International publication number:
**WO 2004/086707 (07.10.2004 Gazette 2004/41)**

(54) **FILTERING METHOD FOR TRANSMIT PROCESSING IN ORTHOGONAL FREQUENCY DIVISION MULTIPLEX COMMUNICATION SYSTEMS AND RELATED FILTERING APPARATUS**

FILTERVERFAHREN ZUR SENDEVERARBEITUNG IN ORTHOGONALEN FREQUENZTEILUNGS-MULTIPLEXKOMMUNIKATIONSSYSTEMEN UND ENTSPRECHENDE FILTERVORRICHTUNG

PROCEDE DE FILTRAGE POUR LE TRAITEMENT DE TRANSMISSION DANS DES SYSTEMES DE COMMUNICATION DE MULTIPLEXAGE PAR REPARTITION ORTHOGONALE DE LA FREQUENCE ET APPAREIL DE FILTRAGE ASSOCIE

(84) Designated Contracting States:
**DE GB**

(43) Date of publication of application:
**28.12.2005 Bulletin 2005/52**

(73) Proprietor: **NTT DoCoMo, Inc.**
**Tokyo (JP)**

(72) Inventor: **KUSUME, Katsutoshi**
**80687 Munich (DE)**

(74) Representative: **HOFFMANN EITLE**
**Patent- und Rechtsanwälte**
**Arabellastrasse 4**
**81925 München (DE)**

(56) References cited:

- **MERTINS A: "Design of redundant FIR precoders for arbitrary channel lengths based on an MMSE criterion" 2002 IEEE INTERNATIONAL CONFERENCE ON COMMUNICATIONS. CONFERENCE PROCEEDINGS. ICC 2002 (CAT. NO.02CH37333), PROCEEDINGS OF IEEE INTERNATIONAL CONFERENCE ON COMMUNICATIONS, NEW YORK, NY, USA, 28 APRIL-2 MAY 2002, pages 212-216 vol.1, XP002253958 2002, Piscataway, NJ, USA, IEEE, USA ISBN: 0-7803-7400-2**
- **SZABO A ET AL: "Linearly prefiltered OFDM based on long-term properties of the channel covariance matrix" 2002 IEEE 56TH VEHICULAR TECHNOLOGY CONFERENCE PROCEEDINGS (CAT. NO.02CH37359), 2002 IEEE 56TH VEHICULAR TECHNOLOGY CONFERENCE PROCEEDINGS, VANCOUVER, BC, CANADA, 24-28 SEPT. 2002, pages 2066-2070 vol.4, XP002253959 2002, Piscataway, NJ, USA, IEEE, USA ISBN: 0-7803-7467-3**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 609 282 B1

Printed by Jouve, 75001 PARIS (FR)

## Description

Field of Invention

The present invention relates to a method for transmit processing in orthogonal frequency division multiplex communication systems and a related apparatus, and in particular to a method for transmit processing in orthogonal frequency division multiplex communication systems using linear filtering based on channel state information.

Background Art

Multimedia applications have been successful over the last years in fixed networks - e.g., on the Internet - lead to growing demands for high data rates. In view of migration of such applications also to the domain of wireless communication systems, high data rates will be required in such wireless communication systems, in particular on the downlink. The high data rates lead to broadband signals which results in severe frequency selective channels.

In view of this, multicarrier systems such as orthogonal frequency division multiplexing OFDM and multicarrier code division multiple access MC CDMA have been proposed as scheme for future mobile communication systems, e.g., in J.A.C. Bingham, "Multicarrier Modulation for Data Transmission: An Idea Whose Time Has Come", IEEE Communications Magazine, Vol. 28, No. 5, pp. 5-14, May 1990 and S. Abeta, H. Atarashi, and M. Sawahashi, "Forward Link Capacity of Coherent DS-CDMA and MC-CDMA Broadband Packet Wireless Access in a Multi-Cell Environment", in Proc. IEEE Vehicular Technology Conference, VTC 2000-Fall, Boston, USA, September 2000.

Multicarrier systems are advantageous over single carrier systems in terms of computational complexity, R. van Nee and R. Prasad, OFDM for Wireless Multimedia Communications, Artech House Publishers, Boston, Londen, 2000. Data streams are distributed on subcarriers of lower data rate, where the subcarriers are orthogonal to each other and transmitted in parallel. As is known in the art, this is realized by a Fourier Transformation in combination with a so-called cyclic prefix extension. A fast implementation of the Fourier Transform enables simple transceivers for multicarrier communication systems which is important with respect to the realization of compact terminals with low battery consumption.It should be noted that multicarrier systems have been standardized, e.g., according to E.T.475, "Broadband Radio Access Networks (BRAN); HIPERLAN Type 2; Physical (PHY) Layer, European Telecommunication Standards Institute (ETSI), Valbonne, France, Tech. Rep., April 2000.

A drawback of multicarrier systems is severe performance degradation for long channel echos exceeding the cyclic prefix. Although multicarrier systems have been successfully implemented for indoor environments, a problem may arise when multicarrier systems are used in mobile communication systems due to the variety of communication environments. Further, the overhead due to the cyclic prefix for highly dispersive channels results in a bit rate loss.

Some approaches known in the art that tackle these problems are, e.g, non-linear filters in the time domain - as proposed in N. Al-Dhahir and J.M. Cioffi, "Optimum Finite-Length Equalization for Multicarrier Transceivers", IEEE Transactions on Communications, Vol. 44, No. 1, pp. 56-64, January 1996, Y Sun, "Bandwith-Efficient Wireless OFDM", IEEE Journal of Selected Areas in Communications, Vol. 19, No. 11, pp. 2267-2278, November 2001, H. Schmidt and K. D. Kammeyer, "Impulse Truncation for Wireless Communication OFDM Systems", in 5th International OFDM Workshop, Hamburg, Germany, September 2000, P. J. W. Melsa, R. C. Younce, and C. E. Rohrs, "Impulse Reponse Shortening for discrete Multitone Transceivers", IEEE Transactions on Communications, Vol. 44, No. 12, pp. 1662-1672, December 1996 - and in the frequency domain - as proposed in S. Trautmann, T. Karp, and N. J. Fliege, "Frequency Domain Equalization of DMT/OFDM Systems with Insufficient Guard Interval", in Proc. IEEE Int. Conference on Communications (ICC 2002), Vol. 3, Apr/May 2002, pp. 1646-1650. However, these proposals introduce additional computational burden at the receiver side which is disadvantegeous when applied for mobile terminals.

Further, comparativley less attention has been given to transmit processing schemes for multicarrier systems to solve the problems outlined above. For single carrier systems there exists a proposal for combined optimization at the transmitter side and at the receiver side, G. G. Raleigh and J. M. Cioffi, "Spatio-Temporal Coding for Wireless Communcation", IEEE Transactions on Communications, Vol. 46, No. 3, pp. 357-366, March 1998, a proposal for prerake, R. Esmailzadeh, E. Sourour, and M. Nakagawa, "Prerake Diversity Combining in Time-Division Duplex CDMA Mobile Communications", IEEE Transactions on Vehicular Technology, Vol. 48, No. 3, pp. 795-801, May 1999, a proposal for transmit zero-forcing, M. Joham and W. Utschick, "Downlink Processing for Mitigation of Intracell Interference in DS-CDMA Systems", in Proc. IEEE Int. Symposium on Spread Spectrum Techniques and Applications (ISSSTA 2000), Vol. 1, NJTT, New Jersey, USA, September 2000, pp. 15-19, and a proposal for transmit mimimum mean square filter M. Joham, K. Kusume, M. H.Gzara, W. Utschick, and J. A. Nossek, "Transmit Wiener Filter for the Downlink of the TDD DS-CDMA Systems", in Proc. IEEE Int. Symposium on Spread Spectrum Techniques and Applications (ISSSTA 2002), Prague, Czech Republic, 2002.

Notwithstanding the above, problems are still existing in transmit processing schemes are that non-linear processing at the transmitter side increases computational complexity at the receiver side and further vulnerability of OFDM multicarrier systems to possible nulls of channel frequency responses, see Z. Wang and G. B. Giannakis, "Wireless Mutlicarrier Communications", IEEE Signal Processing Magazine, Vol. 17, No. 3, pp. 29-48, May 2000.

Further, in OFDM multicarrier systems performance degrades severly when the cyclic prefix - also referrred to as guard interval in the following - is not sufficiently long with respect to the maximum delay of the channel, or in other words when the maximum delay of the channel exceeds the guard interval.

From Mertins A.: Design of Redundant FIR Precoders for Arbitrary Channel Lengths based on an MMSE Criterion, a joint design of transmitter and receiver for multi-channel data transmission over dispersive channels is known, wherein the design criterion is the minimization of a means squared error at the receiver output under the constraint of a fixed transmit power.

Summary of Invention

In view of the above, the object of the present invention is to provide a transmit processing scheme for orthogonal frequency division multiple access communication systems allowing for performance improvements without increase of computational complexity at the receiver side.

According to the present invetion this object is achieved through a filtering method for transmit processing in orthogonal frequency division multiplex communication systems. In a first step there is derived a linear filter structure for processing of at least one orthogonal frequency transmission symbol using channel state information, a constraint on transmission power, and a minimum mean square error criterion between an orthogonal frequency transmission symbol and a related estimated received orthogonal frequency transmission symbol at the time of deriving the linear filter structure. Subsequent hereto, the linear filter structure is used to process a filter input vector which is a time domain representation of the orthogonal frequency transmission symbol. In more detail, the filter input vector is filtered for output of a transmission symbol vector minimizing the mean square error criterion and using a transmission power according to the constraint on transmission power.

According to the invention this object is further achieved by deriving the linear filter structure for processing of the at least one orthogonal frequency transmission symbol ($s[n]$), wherein receiving said orthogonal frequency transmission symbol ($s[n]$) at the receiver side is independent from said linear filter structure.

An important advantage of the present invention is that it introduces additional processing complexity only at the transmitter side - e.g., a base station - but does not introduce any additional processing complexity at the receiver side. This is advantageous in that the receiver unit - e.g., a mobile terminal - should be as compact as possible and have minimum battery consumption. On the other hand, additional signal processing and related increased space and power consumption are much more acceptable at the transmitter side.

Further, according to the present invention it is possible to reduce costs for solving the problem outlined above as the number of transmitters in OFDM mobile communication systems is much smaller than the number of receivers. Still further, cheap receivers are attractive to end-users.

Yet another advantage of the present invention is that it enables consideration of quality of service requirements over communication channels. One reason for this is that the optimization during transmit processing is dependent on a pre-specified transmission power. Here, the transmission power may be selected in view of quality of service requirements - e.g., higher transmission power for higher transmission quality or higher data rates - so that the transmission signals will be optimized with respect to the available transmission power.

According to a preferred embodiment of the present invention it is proposed that the transmission symbol vector is transmitted via a single antenna and that the filtering step uses degrees of freedom in time available through extension of vector dimension from the filter input vector to the transmission symbol vector.

This preferred embodiment of the present invention is particularily adapted to so-called single input single output SISO multicarrier systems. For SISO multicarrier systems the proposed transmit proceesing scheme uses optimization in time domain.

According to another preferred embodiment of the present invention it is proposed that a plurality of transmission symbol vectors are transmitted via multiple antennas and that the filtering step uses degrees of freedom in time and space available through extension of dimension from the filter input vector to multiple transmission symbol vectors and through generation of a plurality of transmission symbol vectors with respect to the multiple antennas.

This preferred embodiment of the present invention is particularily adapted to so-called multiple input single output MISO multicarrier systems. For MISO multicarrier systems the proposed transmit processing scheme works simultaneously in the time and the space domain.

Irrespective of the SISO or the MISO case, the present invention allows for a higher flexibilty for transmit optimization, as not only a guard internal is cylically extended as in prior art systems but optimization is achieved over a full set of transmission symbols with or without addition of guard symbols for optimization through filtering. Therefore, the present invenion enables higher data rates in comparision with existing OFDM mutlicarrier systems.

Further, it should be noted that the same air interface may be used for different communication scenarios or in different cells. In the mobile receiver moves from indoor to outdoor or vice versa, then resolvable path delays of communication channels change. Should handover occur, the present invention supports seamless handover as it enables use of the same air interface.

According to yet another preferred embodiment of the present invention it is proposed that the linear filtering divides into scaling of transmission power, conditioning of filter input vector for interference/noise cancellation, and transmission channel matching. Preferably, it is proposed to re-iterate derivation of the linear filter structure when channel state information changes.

Therefore, a further important advantage of the present invention is adaptiveness for a variety of path delays and propagation scenarios while the receiver side is kept unchanged. In particular, while OFDM mobile communication systems - e.g., a wireless LAN - have been applied successfully in indoor environments where the maximum delay of a channel is limited due to limited propagation scope, this does not apply for outdoor environments with many propagation scenarios and many different path delays. Here, re-iteration achieves adaptiveness for many scenarios, e.g, also when there exist long delays exceeding the guard interval.

Further, the transmission processing scheme according to the present invention is adaptive also in terms of noise. In other words, the optimization scheme according to the present invention takes into account how noisy a communication channel in the current communication environment is so that transmission signals are optimized for current noise conditions.

According to yet another preferred embodiment of the present invention there is provided a computer program product directly loadable into the internal memory of a filter apparatus for transmit processing in an OFDM mobile communication environment comprising software code portions for performing the invention filtering method as outlined above when the product is run on a processor of the filter apparatus.

Therefore, the present invention is also provided to achieve an implementation of the present invention on computer or processor systems. In conclusion, such implementation leads to the provision of computer program products for use with a computer system or more specifically a processor comprised, e.g., in the filter apparatus for transmit processing in an OFDM mobile communication environment.

The programs defining the function of the present invention can be delivered to a computer/processor in many forms, including, but not limited to information permanently stored on non-writeable storage media, e.g., read only memory devices such as ROM or CD ROM discs readable by processors or computer I/O attachments; information stored on writable storage media, i.e. floppy discs and hard drives; or information convey to a computer/processor through communication media such as local area network and/or telephone networks and/or Internet or other interface devices. It should be understood, that such media when carrying processor readable instructions implementing the inventive concept represent alternative embodiments of the present invention.

Irrespective of the different preferred embodiments outlined above, it should be noted that the present invention generally allows for flexible cell design in mobile communication environments. Pre-existing designs are strictly related to the maximum delay of communication channels resulting from a cell size. According to the present invention this tight relation between maximum delay and cell size is resolved. The present invention guarantees communication performance even if long channel delays resulting from larger cell sizes exceed guard intervals. E.g., while for an urban area the guard interval would be shorter and cell sizes would be smaller, e.g., microcells, this would not apply in rural areas. Using the different concepts underlying the present invention one may place less base stations in such rural areas and design bigger cells without compromizing the quality of communication channels.

Description of Drawing

In the following the best mode and preferred embodiments of the present invention will be explained with reference to the drawing in which:

Fig. 1 shows a linear model of OFDM multicarrier systems;

Fig. 2 shows equivalent model of parallel communication channels in OFDM multicarrier systems assuming a cyclic prefix larger than the maximum delay of communication channels;

Fig. 3 shows a schematic diagram illustrating the embedding of the filter structure for transmit processing according to the present invention without cyclic prefix extension into OFDM multicarrier systems;

Fig. 4 shows a schematic diagram illustrating the embedding of the filter structure for transmit processing according to the present invention with cyclic prefix extension into OFDM multicarrier systems;

Fig. 5 shows a schematic diagram of the filter structure according to the present invention;

Fig. 6 shows a schematic diagram illustrating the concept of transmit processing for optimized transmission characteristics achieved through the filter stucture shown in Fig. 5;

Fig. 7 shows a flowchart of operation for the filter structure shown in Fig. 5;

Fig. 8 shows a further detailed schematic diagram of the linear filter unit shown in Fig. 5;

Fig. 9 shows a flowchart of operation for the linear filter unit shown in Fig. 8;

Fig. 10 shows a comparison of bit error rates BER for an OFDM multicarrier system, a multicarrier system using SISO transmit processing according to the present invention, and a multicarrier system using MISO transmit processing according to the present invention, where the length of a guard interval has a value of twelve;

Fig. 11 shows a comparison of bit error rates BER for an OFDM multicarrier system, a multicarrier system using SISO transmit processing according to the present invention, and a multicarrier system using MISO transmit processing according to the present invention, where the length of a guard interval has a value of six;

Fig. 12 shows a comparison of bit error rates BER for an OFDM multicarrier system, a multicarrier system using SISO transmit processing according to the present invention, and a multicarrier system using MISO transmit processing according to the present invention, where the length of a guard interval has a value of zero;

Fig. 13 shows a comparison of normalized throughput for different values of signal to noise ratio parameterized by different values of guard interval length for a multicarrier system using transmit processing according to the present invention;

Fig. 14 shows a comparison of normalized throughput for different values of guard interval length parameterized by different values of signal to noise ratio for an OFDM multicarrier system;

Fig. 15 shows a comparison of normalized throughput for different values of guard interval length parameterized by different values of signal to noise ratio for a multicarrier system using transmit processing according to the present invention; and

Fig. 16 shows a comparison of mean square error performance for different values of signal to noise ratio for a multicarrier system using transmit processing according to the present invention.

Description of Best Mode and Preferred Embodiments

In the following, the best mode and preferred embodiments of the present invention will be explained with reference to the drawing. Initially, some basic concepts underlying transmit processing schemes according to the present invention will be explained for a better understanding of the present invention.

*System Model*

Fig. 1 shows a linear model of OFDM multicarrier systems. The linear system model to be described in the following is the basis for explanation of transmit processing schemes according to the present invention. It should be noted that for simplicity channel coding/decoding and interleaving/deinterleaving are not shown Fig. 1.

As shown in Fig. 1, before signals are transmitted from the transmitter the complex symbols

$$s[n] = [s_1[n], \ldots, s_{N_c}[n]]^{\mathrm{T}} \in \mathbb{C}^{N_c}, \qquad (1)$$

of $n$-th OFDM symbol are inverse fast Fourier transformed IFFT by $F^{\mathrm{H}}$ where $N_c$, $(\cdot)^{\mathrm{T}}$, and $(\cdot)^{\mathrm{H}}$ are the number of subcarriers, transpose of a matrix, and Hermitian transpose of a matrix, respectively. Each element arranged in the vector of Equation (1) corresponds to a signal of each subcarrier in frequency domain and is a complex valued modulated baseband signal, e.g., quaternary phase shift keying QPSK symbol. The fast Fourier transform FFT matrix of size $N_c$ by $N_c$ is defined according to

$$F = \frac{1}{\sqrt{N_c}} \begin{bmatrix} 1 & 1 & 1 & \cdots & 1 \\ 1 & \omega & \omega^2 & \cdots & \omega^{N_c-1} \\ 1 & \omega^2 & \omega^4 & \cdots & \omega^{2(N_c-1)} \\ \vdots & \vdots & \vdots & \ddots & \vdots \\ 1 & \omega^{N_c-1} & \omega^{2(N_c-1)} & \cdots & \omega^{(N_c-1)(N_c-1)} \end{bmatrix} \in \mathbb{C}^{N_c \times N_c}, \quad (2)$$

where

$$\omega = e^{-j2\pi/N_c}. \quad (3)$$

Further, the matrix $F$ is unitary and thus the inverse Fourier transform is given by $F^H = F^{-1}$. The transformed signals are cyclically extended by cyclic prefix CP as guard interval GI by the guard interval insertion matrix $G_I$. The guard interval insertion matrix which inserts the cyclic prefix CP of length $N_g$ can be defined according to

$$\boldsymbol{G}_I = \left[ \begin{array}{cc} \boldsymbol{B}^T & \boldsymbol{1}_{N_c} \end{array} \right]^T \in \mathbb{R}^{(N_c+N_g)\times N_c}, \quad (4)$$

where $1_{Nc}$ is an $N_c$ by $N_c$ identity matrix and $B$ corresponds to the last $N_g$ rows of an identity matrix $1_{Nc}$ which can be shown to be

$$\boldsymbol{B} = \left[ \begin{array}{cc} \boldsymbol{0}_{N_g \times (N_c - N_g)} & \boldsymbol{1}_{N_g} \end{array} \right] \in \mathbb{R}^{N_g \times N_c}. \quad (5)$$

In view of the above, the transmit signal $y[n]$ can be expressed according to

$$\boldsymbol{y}[n] = \boldsymbol{G}_I \boldsymbol{F}^H \boldsymbol{s}[n]. \quad (6)$$

Further, at the receiver the cyclic prefix CP is removed and the Fast Fourier Transform FFT is applied to obtain the signal of each subcarrier. The cyclic prefix CP removal matrix $G_R$ is defined according to

$$\boldsymbol{G}_R = \left[ \begin{array}{cc} \boldsymbol{0}_{N_c \times N_g} & \boldsymbol{1}_{N_c} \end{array} \right] \in \mathbb{R}^{N_c \times (N_c + N_g)}. \quad (7)$$

Further, the received signals after the Fast Fourier Transform FFT, $\hat{s}[n]$, can be expressed by the received signal before cyclic prefix CP removal, $r[n] \in C^{Nc+Ng}$ according to

$$\hat{s}[n] = \boldsymbol{F}\boldsymbol{G}_R \boldsymbol{r}[n], \quad (8)$$

where $\hat{s}[n]$ is defined according to

$$\hat{s}[n] = [\hat{s}_1[n], \ldots, \hat{s}_{N_c}[n]]^T \in \mathbb{C}^{N_c}, \quad (9)$$

and for the definition of $r[n]$ reference to channel models explained in more detail in the following is made.

*Channel Models*

In the following two channel models will be considered. The first channel model is for Single-Input-Single-Output SISO channels and the second channel model is for Multiple-Input-Multiple-OutputMISO channels.

*SISO Channel Model*

According to the present invention it is assumed that channel taps of delay $L$ are given for the multipath frequency selective fading channels

$$\boldsymbol{h} = [h_0, \ldots, h_L]^T \in \mathbb{C}^{L+1}, \quad (10)$$

where channel tap coefficients are assumed to be uncorrelated each other and each of them is a Rayleigh distributed random variable. In the following the information being related to channel taps will also be referred to as channel state information. In view of this information, the channel convolution matrix of Toeplitz structure is given by

$$\boldsymbol{H}_0 = \sum_{l=0}^{L} h_l \boldsymbol{\Gamma}^l_{N_c+N_g} = \begin{bmatrix} h_0 & & & & \\ \vdots & \ddots & & & \\ h_L & & \ddots & & \\ & \ddots & & \ddots & \\ & & h_L & \cdots & h_0 \end{bmatrix} \in \mathbb{C}^{(N_c+N_g)\times(N_c+N_g)}, \quad (11)$$

where $\Gamma_N$ is a nilpotent shift matrix

$$\boldsymbol{\Gamma}_N = \begin{bmatrix} \boldsymbol{0}_{1\times(N-1)} & 0 \\ \boldsymbol{1}_{N-1} & \boldsymbol{0}_{(N-1)\times 1} \end{bmatrix} \in \mathbb{R}^{N\times N}, \quad \boldsymbol{\Gamma}^0_N = \boldsymbol{1}_N. \quad (12)$$

Equation (11) represents the channel matrix for the current, $n$-th OFDM symbol, $s[n]$). Due to frequency selectivity of the transmission channel there is an effect for the current OFDM symbol, $s[n]$, from the previous OFDM symbol, $s[n - 1]$, namely the inter-symbol interference ISI. Conidering this, the resulting received signal at the receiver, $r[n]$ at the time instant n can be expressed according to

$$\boldsymbol{r}[n] = \boldsymbol{H}_0\boldsymbol{y}[n] + \boldsymbol{H}_1\boldsymbol{y}[n-1] + \boldsymbol{\eta}[n], \quad (13)$$

where $\eta[n] \in C^{Nc+Ng}$ is a vector of additive white Gaussian noise AWGN and the channel matrix $H_1$ for the previous OFDM symbol is defined according to

$$H_1 = \sum_{l=1}^{L} h_l \Gamma_{N_c+N_g}^{(N_c+N_g-l),\mathrm{T}} = \begin{bmatrix} 0 & & h_L & \cdots & h_1 \\ \vdots & \ddots & & \ddots & \vdots \\ \vdots & & \ddots & & h_L \\ \vdots & & & \ddots & \\ 0 & \cdots & \cdots & \cdots & 0 \end{bmatrix} \in \mathbb{C}^{(N_c+N_g)\times(N_c+N_g)}. \quad (14)$$

### *MISO Channel Model*

Further to the above, for multiple input single output MISO channels, multiple antenna elements are deployed at the transmitter side. The antenna spacing is assumed to be about half the carrier wave length. Further, without restricting scope of the present invention antenna elements may be assumed to be fully correlated. This is the basis to define an array steering vector, e.g., for a uniform linear array ULA according to

$$a_l = \left[1, e^{j\mu}, \ldots, e^{j(M-1)\mu}\right]^{\mathrm{T}} \in \mathbb{C}^M, \quad (15)$$

where $M$ is the number of antenna elements at the transmitter side and the spatial frequency $\mu$ is defined aaccording to

$$\mu = -2\pi \frac{\Delta}{\lambda} \sin \theta_l. \quad (16)$$

Further, $\Delta$, $\lambda$, and $\theta_l$ denote the antenna spacing, the carrier wave length, and the direction of departure DoD of the transmit signals of the $l$-th path of the channel, respectively. Each DoD is assumed to be associated with different delays of the channel.

With Equation (12) and (15), the channel matrix of block Toeplitz structure can be defined according to

$$H_0^{(M)} = \sum_{l=0}^{L} h_l \Gamma_{N_c+N_g}^{l} \otimes a_l^{\mathrm{T}} \in \mathbb{C}^{(N_c+N_g)\times M(N_c+N_g)}, \quad (17)$$

In this equation '⊗' denotes Kronecker product. It can be seen that the MISO channel matrix of Equation (17) reduces to the SISO channel matrix of Equation (11) when the number of antenna elements at the transmitter is one ($M$ = 1), i.e.:

$$H_0^{(1)} = H_0. \quad (18)$$

Similar to $H_0^{(M)}$ the MISO channel matrix for the previous OFDM symbol $s[n - 1]$ can be defined according to

$$H_1^{(M)} = \sum_{l=1}^{L} h_l \Gamma_{N_c+N_g}^{(N_c+N_g-l),\mathrm{T}} \otimes a_l^{\mathrm{T}} \in \mathbb{C}^{(N_c+N_g)\times M(N_c+N_g)}. \qquad (19)$$

It should be noted that equation (19) of MISO channels reduces to Equation (14) of SISO channels when $M$ = 1, i.e.

$$H_1^{(1)} = H_1. \qquad (20)$$

*Principle of OFDM Systems*

In view of the explanations given above, in the following further principles underlying the present invention will be explained with respect to Fig. 2. In particular, Fig. 2 shows an equivalent model of parallel communication channels in OFDM multicarrier systems assuming a cyclic prefix larger than the maximum delay of communication channels.

Initially, it will be shown how parallel channels are formed by Fourier transform with the cyclic prefix. Then, another view to look at OFDM systems will follow, namely how OFDM systems obtain frequency diversity. Finally, an analytical expression of signal to noise ratio will be derived for evaluation of achievements of the present invention.

In view of Fig. 1, a linear equation system for representation of an OFDM multicarrier system can now be constructed from Equation (6, 8, 11, 13, 14) according to

$$\hat{s}[n] = FG_{\mathrm{R}}H_0G_{\mathrm{I}}F^{\mathrm{H}}s[n] + FG_{\mathrm{R}}H_1G_{\mathrm{I}}F^{\mathrm{H}}s[n-1] + FG_{\mathrm{R}}\eta[n]. \qquad (21)$$

It should be noted that the principle of OFDM multicarrier systems is explained here for the SISO channels model outlined above. In OFDM multicarrier systems the cyclic prefix CP size is set to be larger than the maximum delay of the channel in order to avoid the intersymbol interference ISI. This means that the cyclic prefix CP size $N_g$ is chosen so that

$$N_g \geq L, \qquad (22)$$

is satisfied. In other words, when this Equation (22) is satisfied, there is no intersymbol interference ISI at the receiver side after removing the cyclic prefix CP. This can be confirmed using the developed linear system. From Equation (7) and (14) the following equation is fulfilled

$$G_{\mathrm{R}}H_1 = 0, \qquad (23)$$

With Equation (23), Equation (21) reduces to

$$\hat{s}[n] = FG_{\mathrm{R}}H_0G_{\mathrm{I}}F^{\mathrm{H}}s[n] + FG_{\mathrm{R}}\eta[n]. \qquad (24)$$

Another important property, which comes from the use of the cyclic prefix CP is that the Toeplitz structure of the channel convolution matrix $\boldsymbol{H}_0$ becomes circulant

$$\boldsymbol{H}_{\mathrm{c}} = \boldsymbol{G}_{\mathrm{R}}\boldsymbol{H}_0\boldsymbol{G}_{\mathrm{I}}, \qquad (25)$$

The circulant matrix $\boldsymbol{H}_{\mathrm{c}}$ may be further diagonalized using a Fourier transform according to

$$\boldsymbol{F}\boldsymbol{H}_{\mathrm{c}}\boldsymbol{F}^{\mathrm{H}} = \sqrt{N_{\mathrm{c}}}\,\mathrm{diag}\,(\boldsymbol{F}\boldsymbol{h}') = \mathrm{diag}\,(\lambda_1, \ldots, \lambda_{N_{\mathrm{c}}}) = \Lambda, \qquad (26)$$

where $h'$ is the first column of $\boldsymbol{H}_0$ (cf. Equation (10)). Therefore, Equation (24) can be rewritten in the simple form which reads according to

$$\hat{s}[n] = \Lambda s[n] + \tilde{\boldsymbol{\eta}}[n], \qquad (27)$$

where $\tilde{\eta}[n]$ is defined according to

$$\tilde{\boldsymbol{\eta}}[n] = \boldsymbol{F}\boldsymbol{G}_{\mathrm{R}}\boldsymbol{\eta}[n] = [\tilde{\eta}_1, \ldots, \tilde{\eta}_{N_{\mathrm{c}}}]^{\mathrm{T}} \in \mathbb{C}^{N_{\mathrm{c}}}, \qquad (28)$$

Here, $\tilde{\eta}[n]$ is a noise vector in frequency domain. As can be seen from Equation (27), the signals in different subcarriers are independent from each other and OFDM systems form parallel channels that are illustrated in Fig. 2.

*Diversity Gain in Frequency Domain*

In the following it will be explained how OFDM multicarrier systems gain diversity in frequency domain from the multipath channel. Heretofor, a downshift operator is defined according to

$$\boldsymbol{S} = \begin{bmatrix} \boldsymbol{e}_2 & \boldsymbol{e}_3 & \ldots & \boldsymbol{e}_{N_{\mathrm{c}}} & \boldsymbol{e}_1 \end{bmatrix} \in \mathbb{R}^{N_{\mathrm{c}} \times N_{\mathrm{c}}}, \qquad (29)$$

where $e_k$, $k = \{1,..., N_c\}$ is the $k$-th column of the $N_{\mathrm{c}}$ by $N_{\mathrm{c}}$ identity matrix. If Equation (22) is satisfied, it can be shown that the following condition is fulfilled

$$\boldsymbol{G}_{\mathrm{R}}\Gamma^{l}_{N_{\mathrm{c}}+N_{\mathrm{g}}}\boldsymbol{G}_{\mathrm{I}} = \boldsymbol{S}^{l}. \qquad (30)$$

Further, given the relation

$$\boldsymbol{F}\boldsymbol{S}\boldsymbol{F}^{\mathrm{H}} = \boldsymbol{D} = \mathrm{diag}\begin{pmatrix} 1 & \omega & \omega^2 & \cdots & \omega^{N_{\mathrm{c}}-1} \end{pmatrix}, \qquad (31)$$

then, it follows

$$\left(\boldsymbol{F}\boldsymbol{S}\boldsymbol{F}^{\mathrm{H}}\right)^{l} = \boldsymbol{F}\boldsymbol{S}^{l}\boldsymbol{F}^{\mathrm{H}} = \boldsymbol{D}^{l} = \operatorname{diag}\left(\begin{array}{ccccc} 1 & \omega^{l} & \omega^{2l} & \cdots & \omega^{l(N_{\mathrm{c}}-1)} \end{array}\right), \qquad (32)$$

whose diagonal elements are the $(l + 1)\mathrm{mod}N_c$-th column of Fourier transform matrix as shown in Equation (2) multiplied by the normalization factor $\sqrt{N_c}$ .The diagonal matrix $\Lambda$ in Equation (26) may be rewritten according to

$$\begin{aligned} \Lambda &= \boldsymbol{F}\boldsymbol{H}_{\mathrm{c}}\boldsymbol{F}^{\mathrm{H}} = \boldsymbol{F}\boldsymbol{G}_{\mathrm{R}}\boldsymbol{H}_{0}\boldsymbol{G}_{\mathrm{I}}\boldsymbol{F}^{\mathrm{H}} \\ &= \boldsymbol{F}\boldsymbol{G}_{\mathrm{R}}\sum_{l=0}^{L} h_{l}\Gamma_{N_{\mathrm{c}}}^{l}\boldsymbol{G}_{\mathrm{I}}\boldsymbol{F}^{\mathrm{H}} = \sum_{l=0}^{L} h_{l}\boldsymbol{F}\boldsymbol{G}_{\mathrm{R}}\Gamma_{N_{\mathrm{c}}}^{l}\boldsymbol{G}_{\mathrm{I}}\boldsymbol{F}^{\mathrm{H}} \\ &= \sum_{l=0}^{L} h_{l}\boldsymbol{D}^{l}, \end{aligned} \qquad (33)$$

where Equation (30) and (32) are applied for the last step. Equation (33) shows that the diagonal matrix $\Lambda$ is a superposition of diagonal matrices of $h_lD^l$, $(0 \leq l \leq L)$. Since the diagonal elements of $\Lambda$ represent frequency responses of the channel for subcarriers, larger the number of paths $L$, more diversity in frequency domain is obtained that leads to more reliable communication. This way, the diversity in frequency domain is obtained in OFDM systems.

*Signal to Noise Ratios SNR on Each Subcarrier*

For the explanations to follow, it is useful to derive an analytical expression of the signal to noise ratio SNR on each subcarrier. From Equation (27), when there is no intersymbol interference ISI, the desired signal and noise in the received signal are $\Lambda s[n]$ and $\tilde{\eta}[n]$, respectively. It is assumed that the input signals $s[n]$ and the noise $\eta[n]$ are white Gaussian process with variance 1 and $\bar{\sigma}_{\eta}^{2}$, respectively, according to

$$\mathrm{E}\left[\boldsymbol{s}[n]\boldsymbol{s}^{\mathrm{H}}[n]\right] = \mathbf{1}_{N_{\mathrm{c}}} \quad \text{and} \quad \mathrm{E}\left[\boldsymbol{\eta}[n]\boldsymbol{\eta}^{\mathrm{H}}[n]\right] = \sigma_{\eta}^{2}\mathbf{1}_{N_{\mathrm{c}}}. \qquad (34)$$

Then, it follows that

$$\mathrm{E}\left[\Lambda\boldsymbol{s}[n]\boldsymbol{s}^{\mathrm{H}}[n]\Lambda^{\mathrm{H}}\right] = \Lambda\mathrm{E}\left[\boldsymbol{s}[n]\boldsymbol{s}^{\mathrm{H}}[n]\right]\Lambda^{\mathrm{H}} = |\Lambda|^{2}, \qquad (35)$$

and

$$\mathrm{E}\left[\tilde{\boldsymbol{\eta}}[n]\tilde{\boldsymbol{\eta}}^{\mathrm{H}}[n]\right] = \mathrm{E}\left[\boldsymbol{F}\boldsymbol{G}_{\mathrm{R}}\boldsymbol{\eta}[n]\boldsymbol{\eta}^{\mathrm{H}}[n]\boldsymbol{G}_{\mathrm{R}}^{\mathrm{T}}\boldsymbol{F}^{\mathrm{H}}\right] = \boldsymbol{F}\mathrm{E}\left[\bar{\boldsymbol{\eta}}[n]\bar{\boldsymbol{\eta}}^{\mathrm{H}}[n]\right]\boldsymbol{F}^{\mathrm{H}} = \sigma_{\eta}^{2}\mathbf{1}, \qquad (36)$$

where $\tilde{\eta}[n] = G_R\eta[n] \in C^{N_c}$ which is white Gaussian noise with the variance $\sigma_{\eta}^{2}$ same for the noise vector $\eta$. From Equation (35) and (36) the signal to noise ratio SNR of the $k$-th subcarrier can be expressed according to

$$\gamma_k = \frac{|\lambda_k|^2}{\sigma_\eta^2} \quad \text{for} \quad 1 \leq k \leq N_c. \tag{37}$$

It should be noted that the noise power is independent of subcarriers.

*Analytical Expression of Mean Square Error MSE*

In the following, there will be derived an analytical expression for a mean square error MSE in OFDM multicarrier systems. It is assumed, that the transmit power is normalized at the transmitter side to compensate channel distortion in frequency domain. In other words, there is introduced a further scalar $\beta_{OFDM}$ into the system model shown in Fig. 1 to normalize the transmit power increased by $G_l$. The scalar $\beta_{OFDM}$ is defined according to:

$$\beta_{\text{OFDM}}^{-1} = \sqrt{\frac{N_c}{N_c + N_g}}. \tag{38}$$

Further, at the receiver side a filter of diagonal structure is introduced to compensate the channel distortion according to:

$$|\mathbf{\Lambda}|^{-2}\,\mathbf{\Lambda}^*, \tag{39}$$

Assuming the definition

$$|\mathbf{\Lambda}| = \text{diag}\left(|\lambda_1|, \ldots, |\lambda_{N_c}|\right). \tag{40}$$

the estimated signal can be expressed according to (cf. Equation (27))

$$\tilde{s}[n] = s[n] + \beta_{\text{OFDM}}\,|\mathbf{\Lambda}|^{-2}\,\mathbf{\Lambda}^*\tilde{\eta}[n]. \tag{41}$$

Then, the mean square error MSE is calculated according to

$$\begin{aligned} \varepsilon_{\text{OFDM}} &= \text{E}\left[\|\tilde{s}[n] - s[n]\|_2^2\right] \\ &= \text{E}\left[\left\|\beta_{\text{OFDM}}\,|\mathbf{\Lambda}|^{-2}\,\mathbf{\Lambda}^*\tilde{\eta}[n]\right\|_2^2\right] \\ &= \sigma_\eta^2\beta_{\text{OFDM}}^2\text{tr}\left(|\mathbf{\Lambda}|^{-2}\right) \\ &= \gamma^{-1}\left(1 + N_g/N_c\right)\sum_{k=1}^{N_c}|\lambda_k|^{-2}, \end{aligned} \tag{42}$$

The signal to noise ratio SNR γ is defined according to

$$\gamma = \frac{\sigma_s^2}{\sigma_\eta^2} = \frac{1}{\sigma_\eta^2}. \tag{43}$$

Whithout loss of generality it may be assumed that the information symbol has energy $\sigma_s^2 = 1$ (cf. Equation (34)).

From Equation (42) it may be seen that the mean square error MSE decreases linearly as the signal to noise ratio SNR increases. The channel frequency responses also have a primal impact on the mean square error MSE. When the a subcarrier experience a deep fade the subchannel yields large error.

*Basic Concepts of Present Invention*

In view of the general explanations given above, in the following further details of filtering for transmit processing in a multicarrier system will be explained with reference to Fig. 3 to 16.

Fig. 3 shows a schematic diagram illustrating the embedding of the filter structure for transmit processing according to the present invention without cyclic prefix extension into OFDM multicarrier systems.

As shown in Fig. 3, according to the present invention it is proposed to replace the cyclic prefix extension CP known for standard OFDM multicarrier systems by a time-domain filter 10. Therefore, according to the present invention the transmit signal is optimized by making use of the degrees of freedom in time domain which is originally for the cyclic prefix CP. Further, for MISO channels also degrees of freedom in spatial domain become available for transmit optimization.

Fig. 4 shows a schematic diagram illustrating the embedding of the filter structure for transmit processing according to the present invention with cyclic prefix extension into OFDM multicarrier systems.

As shown in Fig. 4, this preferred embodiment of the present invention differs over the embodiment shown in Fig. 3 in that a cyclic extension is added in a related CP/GI unit 12 to the output the filter structure 10.

Fig. 5 shows a schematic diagram of the filter structure according to the present invention as shown in Fig. 3 and 4.

As shown in Fig. 5, the filter structure 10 according to the present invention comprises a synthesis unit 14 and a linear filter unit 16. It should be noted that irrespective of whether the linear filtering result will be extended by a cyclic prefix or not, the basic contruction of the linear filtering structure 10 shown in Fig. 5 remains unchanged.

Operatively, the synthesis unit 14 synthezises a linear filter for processing of at least one orthogonal frequency transmission symbol using channel state information, a constraint on transmission power, and a minimum mean square error criterion between an orthogonal frequency transmission symbol and a related received orthogonal frequency transmission symbol at the time of synthezising the linear filter.

Further operatively, the linear filter unit 16 implements the linear filter generated by the synthesis unit 14. It receives at least one orthogonal frequency transmission symbol transformed from the frequency domain into time domain as filter input vector. This filter input vector is then optimized by the linear filter unit 16 for output of a transmission symbol vector minimizing the mean square error criterion and using a transmission power according to the constraint on transmission power.

As shown in Fig. 5, according to the present invention it is assumed that instantaneous channel state information is known at the transmitter. In time division duplex TDD systems, the uplink and the downlink reside in the same carrier frequency band but are seperated in time according to different time slots. Since the channel state information is dependent on the carrier frequency the channel state information may be estimated from the uplink signal and be used for the downlink.

Further, in frequency division duplex FDD systems the uplink and the downlink communication channel reside at different carrier frequencies. Therefore, the channel sate information CSI for the downlink is different from the channel sate information for the uplink. In view of this, the channel state information estimated for the uplink can not be applied for downlink related transmit processing. Here, channel state information estimated at the receiver side for the downlinik may be fed back to the transmitter side. It should be noted that channel state information may fade fast and that therefore care has to be taken that it does not become obsolete at the time it is received at the transmitter side.

As shown in Fig. 5, the present invention also considers noise power observed at the receiver. Here, the noise power should be estimated at the receiver side and be fed back to the transmitter. One may assume that noise power does not change frequently and that therefore also feedback is not required too often.

Fig. 6 shows a schematic diagram illustrating the concept of transmit processing for optimized transmission characteristics achieved through the filter stucture shown in Fig. 5.

As shown in Fig. 6, according to the present invention transmission symbols are not only cyclically extended as in standard OFDM multicarrier systems. To the contrary, after transformation of an OFDM symbol from frequency domain into time domain the related transformation result may be modified with respect to each single element for optimizeed transmission. For the SISO case degrees of freedom for optimization are in the time domain. Further, for the MISO case degrees of freedom for optimization are in the time and space domain.

For the SISO case shown in Fig. 6, the filter structure will output a vector of dimension $N$ for each OFDM symbol $s[n]$. For the MISO case the filter structure will output a vector of dimension $N \cdot M$, with $M$ as number of transmit antennas, $n$ as index of the OFDM symbol, and (1),..., ($M$) as index of antenna, respectively.

Fig. 7 shows a flowchart of operation for the filter structure shown in Fig. 5.

As shown in Fig. 7, in a first step S10 there is derived a linear filter structure using channel state information and constraints on transmission power, as will be explained in more detail in the following. After receipt of a time domain representation of the next OFDM symbol to be transmitted in a step S12, the linear filtering for transmit processing is achieved in a step S 14. Then, the filtering result is forwarded either for extension of a cyclic prefix or directly without cyclic prefix extension for subsequent transmission of the corresponding transmit processing result (step 16).

A further step S18 shown in Fig. 7 is related to the update of the linear filter structure in view of a change of channel state information or a change of the constraint on transmission power, e.g,. due to a change of quality of service requirements. Here, it should be noted that such an update may be correlated to the structure of the OFDM transmission, e.g., such that one update occures after each OFDM frame. Alternatively, synthesis and update of the filter structure may also be achieved without restriction on the time of such update on occurence of modified channel state information and/or contraint on transmission power.

Fig. 8 shows a further detailed schematic diagram of the linear filter unit 16 shown in Fig. 5.

As shown in Fig. 8, the linear filter unit 16 comprises a transmission power scaling unit 18, a channel matching unit 20, and an interference noise enhancement unit 22 improving on noise and interference characteristics.

Fig. 9 shows a flowchart of operation for the linear filter unit 16 shown in Fig. 8.

As shown in Fig. 9, in a step S20 the transmission power scaling unit 18 achieves scaling of transmission power in accordance with the contraint on transmission power. In a step S22 the channel matching unit 22 achieves channel matching for adaptation to characteristics of the communication channel as indicated by the instantaneous channel state information. In a step S24 the interference/noise enhancement unit 22 modifies the scaled and channel matched intermediate result for further optimization and transmit processing before actual transmission occurs.

*Transmit Filter Without Cyclic Prefix Extention*

In the following a theoretical analysis of transmit filters without and with cyclic prefix extension at the transmitter will be given on the basis of the OFDM multicarrier system model explained above with respect to Fig. 1 and 2.

It should be noted that irrespective of the type of filter used at the transmitter side, the structure of the receiver may be assumed to remain unchanged. In other words, only the structure of the transmitter is changed through insertion of an additional filter $\tilde{P}$ before the filter chain of the inverse Fast Fourier Transform IFFT as shown in Fig. 3 and 4 referred to above.

Therefore, according to the present invention there is proposed a replacement of transmit processing of the standard OFDM multicarrier systems by the linear filter $\tilde{P}$. For derivation of a filter structure without cyclix prefix extension at the transmitter side the estimated signal $\hat{s}[n]$ at the receiver is represented according to

$$\hat{s}[n] = \boldsymbol{F}\boldsymbol{G}_{\mathrm{R}}\boldsymbol{H}_0\tilde{\boldsymbol{P}}\boldsymbol{s}[n] + \boldsymbol{F}\boldsymbol{G}_{\mathrm{R}}\boldsymbol{H}_1\tilde{\boldsymbol{P}}\boldsymbol{s}[n-1] + \boldsymbol{F}\boldsymbol{G}_{\mathrm{R}}\boldsymbol{\eta}[n]. \qquad (44)$$

From Equation (44) the mean square error MSE to be minimized for derivation of the desired linear filter structure is calculated according to

$$\begin{aligned}\varepsilon_{\mathrm{TxWF}} &= \mathrm{E}\left[\|s[n]-\beta\hat{s}[n]\|_2^2\right] \\ &= \beta^2\mathrm{tr}\left(\tilde{\boldsymbol{P}}^{\mathrm{H}}\boldsymbol{H}_0^{\mathrm{H}}\boldsymbol{G}_{\mathrm{R}}^{\mathrm{T}}\boldsymbol{G}_{\mathrm{R}}\boldsymbol{H}_0\tilde{\boldsymbol{P}}\right)+\beta^2\mathrm{tr}\left(\tilde{\boldsymbol{P}}^{\mathrm{H}}\boldsymbol{H}_1^{\mathrm{H}}\boldsymbol{G}_{\mathrm{R}}^{\mathrm{T}}\boldsymbol{G}_{\mathrm{R}}\boldsymbol{H}_1\tilde{\boldsymbol{P}}\right) \\ &\quad -2\beta\mathrm{Re}\left\{\mathrm{tr}\left(\boldsymbol{F}\boldsymbol{G}_{\mathrm{R}}\boldsymbol{H}_0\tilde{\boldsymbol{P}}\right)\right\}+\beta^2\sigma_\eta^2 N_{\mathrm{c}}+N_{\mathrm{c}},\end{aligned} \qquad (45)$$

Here, it should be noted that a scalar $\beta \in$ R for scaling of transmission power is introduced. According to the present invention, the linear filter structure is adapted to generate a receive signal which has an amplitude different from the original desired signal. This is achieved through introduction of a constraint on the transmit power according to

$$\mathrm{E}\left[\left\|\tilde{\boldsymbol{P}}\boldsymbol{s}[n]\right\|_2^2\right]=\mathrm{tr}\left(\tilde{\boldsymbol{P}}^{\mathrm{H}}\tilde{\boldsymbol{P}}\right)=E_{\mathrm{Tx}}. \qquad (46)$$

Further, according to the present invention the linear filter structure is adapted to use the whole available transmit power $E_{\mathrm{Tx}}$. The linear filter structure minimizes the mean square error MSE in Equation (45) while satisfying the constraint in Equation (46). The related optimization problem is stated according to

$$\left[\tilde{\boldsymbol{P}},\beta_{\mathrm{TxWF}}\right]=\arg\min_{\tilde{\boldsymbol{P}}',\beta}\varepsilon_{\mathrm{TxWF}}, \qquad \text{s.t.:} \quad \mathrm{tr}\left(\tilde{\boldsymbol{P}}'^{\mathrm{H}}\tilde{\boldsymbol{P}}'\right)=E_{\mathrm{Tx}}. \qquad (47)$$

It should be noted that the constraint in Equation (47) is important as otherwise the solution from the optimization problem may not exist or will become unstable due to rank deficiency.

In order to solve the optimization problem according to Equation (47) according to the present invention there is constructed a Lagrangian function with the Lagrangian factor $\lambda \in$ R according to:

$$L\left(\tilde{\boldsymbol{P}}',\beta,\lambda\right)=\varepsilon_{\mathrm{TxWF}}-\lambda\left(\mathrm{tr}\left(\tilde{\boldsymbol{P}}'^{\mathrm{H}}\tilde{\boldsymbol{P}}'\right)-E_{\mathrm{Tx}}\right). \qquad (48)$$

To find the optimum solution, the derivatives of the Lagrangian Function with respect to $\tilde{P}$ and $\beta$ are set to zero:

$$\frac{\partial L\left(\tilde{\boldsymbol{P}}',\beta,\lambda\right)}{\partial\tilde{\boldsymbol{P}}'}=\beta^2\boldsymbol{H}_0^{\mathrm{T}}\boldsymbol{G}_{\mathrm{R}}^{\mathrm{T}}\boldsymbol{G}_{\mathrm{R}}\boldsymbol{H}_0^*\tilde{\boldsymbol{P}}'^*+\beta^2\boldsymbol{H}_1^{\mathrm{T}}\boldsymbol{G}_{\mathrm{R}}^{\mathrm{T}}\boldsymbol{G}_{\mathrm{R}}\boldsymbol{H}_1^*\tilde{\boldsymbol{P}}'^*-\beta\boldsymbol{H}_0^{\mathrm{T}}\boldsymbol{G}_{\mathrm{R}}^{\mathrm{T}}\boldsymbol{F}^{\mathrm{T}}-\lambda\tilde{\boldsymbol{P}}'^*=0, \qquad (49)$$

and

$$\begin{aligned}\frac{\partial L\left(\tilde{\boldsymbol{P}}',\beta,\lambda\right)}{\partial\beta} &= 2\beta\operatorname{tr}\left(\tilde{\boldsymbol{P}}'^{\mathrm{H}}\boldsymbol{H}_0^{\mathrm{H}}\boldsymbol{G}_{\mathrm{R}}^{\mathrm{T}}\boldsymbol{G}_{\mathrm{R}}\boldsymbol{H}_0\tilde{\boldsymbol{P}}'\right)+2\beta\operatorname{tr}\left(\tilde{\boldsymbol{P}}'^{\mathrm{H}}\boldsymbol{H}_1^{\mathrm{H}}\boldsymbol{G}_{\mathrm{R}}^{\mathrm{T}}\boldsymbol{G}_{\mathrm{R}}\boldsymbol{H}_1\tilde{\boldsymbol{P}}'\right)\\ &\quad -2\mathrm{Re}\left\{\operatorname{tr}\left(\boldsymbol{F}\boldsymbol{G}_{\mathrm{R}}\boldsymbol{H}_0\tilde{\boldsymbol{P}}'\right)\right\}+2\beta\sigma_\eta^2 N_{\mathrm{c}}=0.\end{aligned} \tag{50}$$

The structure of the linear filter is derived by solving Equation (49) for $\tilde{P}'$ for the desired optimum according to

$$\tilde{\boldsymbol{P}}=\beta^{-1}\left(\boldsymbol{H}_0^{\mathrm{H}}\boldsymbol{G}_{\mathrm{R}}^{\mathrm{T}}\boldsymbol{G}_{\mathrm{R}}\boldsymbol{H}_0+\boldsymbol{H}_1^{\mathrm{H}}\boldsymbol{G}_{\mathrm{R}}^{\mathrm{T}}\boldsymbol{G}_{\mathrm{R}}\boldsymbol{H}_1-\lambda\beta^{-2}\mathbf{1}\right)^{-1}\boldsymbol{H}_0^{\mathrm{H}}\boldsymbol{G}_{\mathrm{R}}^{\mathrm{T}}\boldsymbol{F}^{\mathrm{H}}. \tag{51}$$

The related result is inserted into the constraint according to Equation (47).

Then, the constraint is solved for $\beta^{-1}$ according to

$$\beta^{-1}=\sqrt{\frac{E_{\mathrm{Tx}}}{\operatorname{tr}\left(\left(\boldsymbol{H}_0^{\mathrm{H}}\boldsymbol{G}_{\mathrm{R}}^{\mathrm{T}}\boldsymbol{G}_{\mathrm{R}}\boldsymbol{H}_0+\boldsymbol{H}_1^{\mathrm{H}}\boldsymbol{G}_{\mathrm{R}}^{\mathrm{T}}\boldsymbol{G}_{\mathrm{R}}\boldsymbol{H}_1+\xi\mathbf{1}\right)^{-2}\boldsymbol{H}_0^{\mathrm{H}}\boldsymbol{G}_{\mathrm{R}}^{\mathrm{T}}\boldsymbol{G}_{\mathrm{R}}\boldsymbol{H}_0\right)}}, \tag{52}$$

Assuming the definition

$$\xi=-\lambda\beta^{-2}\in\mathbb{R}. \tag{53}$$

then Equation (45) can be rewritten in view of Equation (51) and Equation (53) according to

$$\begin{aligned}\varepsilon_{\mathrm{TxWF}} &= \operatorname{tr}\left(\left(\boldsymbol{H}_0^{\mathrm{H}}\boldsymbol{G}_{\mathrm{R}}^{\mathrm{T}}\boldsymbol{G}_{\mathrm{R}}\boldsymbol{H}_0+\boldsymbol{H}_1^{\mathrm{H}}\boldsymbol{G}_{\mathrm{R}}^{\mathrm{T}}\boldsymbol{G}_{\mathrm{R}}\boldsymbol{H}_1+\xi\mathbf{1}\right)^{-2}\boldsymbol{H}_0^{\mathrm{H}}\boldsymbol{G}_{\mathrm{R}}^{\mathrm{T}}\boldsymbol{G}_{\mathrm{R}}\boldsymbol{H}_0\boldsymbol{H}_0^{\mathrm{H}}\boldsymbol{G}_{\mathrm{R}}^{\mathrm{T}}\boldsymbol{G}_{\mathrm{R}}\boldsymbol{H}_0\right)\\ &\quad +\operatorname{tr}\left(\left(\boldsymbol{H}_0^{\mathrm{H}}\boldsymbol{G}_{\mathrm{R}}^{\mathrm{T}}\boldsymbol{G}_{\mathrm{R}}\boldsymbol{H}_0+\boldsymbol{H}_1^{\mathrm{H}}\boldsymbol{G}_{\mathrm{R}}^{\mathrm{T}}\boldsymbol{G}_{\mathrm{R}}\boldsymbol{H}_1+\xi\mathbf{1}\right)^{-2}\boldsymbol{H}_0^{\mathrm{H}}\boldsymbol{G}_{\mathrm{R}}^{\mathrm{T}}\boldsymbol{G}_{\mathrm{R}}\boldsymbol{H}_0\boldsymbol{H}_1^{\mathrm{H}}\boldsymbol{G}_{\mathrm{R}}^{\mathrm{T}}\boldsymbol{G}_{\mathrm{R}}\boldsymbol{H}_1\right)\\ &\quad -2\operatorname{tr}\left(\left(\boldsymbol{H}_0^{\mathrm{H}}\boldsymbol{G}_{\mathrm{R}}^{\mathrm{T}}\boldsymbol{G}_{\mathrm{R}}\boldsymbol{H}_0+\boldsymbol{H}_1^{\mathrm{H}}\boldsymbol{G}_{\mathrm{R}}^{\mathrm{T}}\boldsymbol{G}_{\mathrm{R}}\boldsymbol{H}_1+\xi\mathbf{1}\right)^{-1}\boldsymbol{H}_0^{\mathrm{H}}\boldsymbol{G}_{\mathrm{R}}^{\mathrm{T}}\boldsymbol{G}_{\mathrm{R}}\boldsymbol{H}_0\right)\\ &\quad +\frac{\sigma_\eta^2 N_{\mathrm{c}}}{E_{\mathrm{Tx}}}\operatorname{tr}\left(\left(\boldsymbol{H}_0^{\mathrm{H}}\boldsymbol{G}_{\mathrm{R}}^{\mathrm{T}}\boldsymbol{G}_{\mathrm{R}}\boldsymbol{H}_0+\boldsymbol{H}_1^{\mathrm{H}}\boldsymbol{G}_{\mathrm{R}}^{\mathrm{T}}\boldsymbol{G}_{\mathrm{R}}\boldsymbol{H}_1+\xi\mathbf{1}\right)^{-2}\boldsymbol{H}_0^{\mathrm{H}}\boldsymbol{G}_{\mathrm{R}}^{\mathrm{T}}\boldsymbol{G}_{\mathrm{R}}\boldsymbol{H}_0\right)+N_{\mathrm{c}}.\end{aligned} \tag{54}$$

To find the solution minimizing Equation (54) according to the present invention it is proposed to compute the derivative and set it zero. Heretofore, the following relations are used

$$\frac{\partial \boldsymbol{C}^{-1}}{\partial\alpha}=-\boldsymbol{C}^{-1}\frac{\partial\boldsymbol{C}}{\partial\alpha}\boldsymbol{C}^{-1}\quad\text{and}\quad\frac{\partial\boldsymbol{C}^{-2}}{\partial\alpha}=-\boldsymbol{C}^{-1}\left(\frac{\partial\boldsymbol{C}}{\partial\alpha}\boldsymbol{C}^{-1}+\boldsymbol{C}^{-1}\frac{\partial\boldsymbol{C}}{\partial\alpha}\right)\boldsymbol{C}^{-1}.$$

Using these relations, the solution to the optimzation problem may be derived from

$$
\begin{aligned}
\frac{\partial \epsilon_{\mathrm{TxWF}}}{\partial \xi} = & -2\mathrm{tr}\left(\left(\boldsymbol{H}_0^{\mathrm{H}}\boldsymbol{G}_{\mathrm{R}}^{\mathrm{T}}\boldsymbol{G}_{\mathrm{R}}\boldsymbol{H}_0 + \boldsymbol{H}_1^{\mathrm{H}}\boldsymbol{G}_{\mathrm{R}}^{\mathrm{T}}\boldsymbol{G}_{\mathrm{R}}\boldsymbol{H}_1 + \xi\mathbf{1}\right)^{-3}\boldsymbol{H}_0^{\mathrm{H}}\boldsymbol{G}_{\mathrm{R}}^{\mathrm{T}}\boldsymbol{G}_{\mathrm{R}}\boldsymbol{H}_0\boldsymbol{H}_0^{\mathrm{H}}\boldsymbol{G}_{\mathrm{R}}^{\mathrm{T}}\boldsymbol{G}_{\mathrm{R}}\boldsymbol{H}_0\right) \\
& -2\mathrm{tr}\left(\left(\boldsymbol{H}_0^{\mathrm{H}}\boldsymbol{G}_{\mathrm{R}}^{\mathrm{T}}\boldsymbol{G}_{\mathrm{R}}\boldsymbol{H}_0 + \boldsymbol{H}_1^{\mathrm{H}}\boldsymbol{G}_{\mathrm{R}}^{\mathrm{T}}\boldsymbol{G}_{\mathrm{R}}\boldsymbol{H}_1 + \xi\mathbf{1}\right)^{-3}\boldsymbol{H}_0^{\mathrm{H}}\boldsymbol{G}_{\mathrm{R}}^{\mathrm{T}}\boldsymbol{G}_{\mathrm{R}}\boldsymbol{H}_0\boldsymbol{H}_1^{\mathrm{H}}\boldsymbol{G}_{\mathrm{R}}^{\mathrm{T}}\boldsymbol{G}_{\mathrm{R}}\boldsymbol{H}_1\right) \\
& +2\mathrm{tr}\left(\left(\boldsymbol{H}_0^{\mathrm{H}}\boldsymbol{G}_{\mathrm{R}}^{\mathrm{T}}\boldsymbol{G}_{\mathrm{R}}\boldsymbol{H}_0 + \boldsymbol{H}_1^{\mathrm{H}}\boldsymbol{G}_{\mathrm{R}}^{\mathrm{T}}\boldsymbol{G}_{\mathrm{R}}\boldsymbol{H}_1 + \xi\mathbf{1}\right)^{-2}\boldsymbol{H}_0^{\mathrm{H}}\boldsymbol{G}_{\mathrm{R}}^{\mathrm{T}}\boldsymbol{G}_{\mathrm{R}}\boldsymbol{H}_0\right) \\
& -\frac{2\sigma_\eta^2 N_{\mathrm{c}}}{E_{\mathrm{Tx}}}\mathrm{tr}\left(\left(\boldsymbol{H}_0^{\mathrm{H}}\boldsymbol{G}_{\mathrm{R}}^{\mathrm{T}}\boldsymbol{G}_{\mathrm{R}}\boldsymbol{H}_0 + \boldsymbol{H}_1^{\mathrm{H}}\boldsymbol{G}_{\mathrm{R}}^{\mathrm{T}}\boldsymbol{G}_{\mathrm{R}}\boldsymbol{H}_1 + \xi\mathbf{1}\right)^{-3}\boldsymbol{H}_0^{\mathrm{H}}\boldsymbol{G}_{\mathrm{R}}^{\mathrm{T}}\boldsymbol{G}_{\mathrm{R}}\boldsymbol{H}_0\right) \\
= & \ 0.
\end{aligned} \tag{55}
$$

Since the trace operator is linear it may be moved outside the sum of Equation (55). Further, Equation (55) is transformed into a compact form according to

$$
\mathrm{tr}\left(\left(\boldsymbol{H}_0^{\mathrm{H}}\boldsymbol{G}_{\mathrm{R}}^{\mathrm{T}}\boldsymbol{G}_{\mathrm{R}}\boldsymbol{H}_0 + \boldsymbol{H}_1^{\mathrm{H}}\boldsymbol{G}_{\mathrm{R}}^{\mathrm{T}}\boldsymbol{G}_{\mathrm{R}}\boldsymbol{H}_1 + \xi\mathbf{1}\right)^{-3}\boldsymbol{H}_0^{\mathrm{H}}\boldsymbol{G}_{\mathrm{R}}^{\mathrm{T}}\boldsymbol{G}_{\mathrm{R}}\boldsymbol{H}_0\left(\xi - \frac{\sigma_\eta^2 N_{\mathrm{c}}}{E_{\mathrm{Tx}}}\right)\mathbf{1}\right) = 0. \tag{56}
$$

In view of the above, the optimum solution characterizing the linear filter structure without cyclic prefix extension is represented according to

$$
\xi = \frac{\sigma_\eta^2 N_{\mathrm{c}}}{E_{\mathrm{Tx}}}. \tag{57}
$$

Therefore, from Equation (51), (52), (53), and (57) the linear filter structure without cyclic prefix extension is represented according to

$$
\tilde{\boldsymbol{P}} = \beta_{\mathrm{TxWF}}^{-1}\left(\boldsymbol{H}_0^{\mathrm{H}}\boldsymbol{G}_{\mathrm{R}}^{\mathrm{T}}\boldsymbol{G}_{\mathrm{R}}\boldsymbol{H}_0 + \boldsymbol{H}_1^{\mathrm{H}}\boldsymbol{G}_{\mathrm{R}}^{\mathrm{T}}\boldsymbol{G}_{\mathrm{R}}\boldsymbol{H}_1 + \frac{\sigma_\eta^2 N_{\mathrm{c}}}{E_{\mathrm{Tx}}}\mathbf{1}\right)^{-1}\boldsymbol{H}_0^{\mathrm{H}}\boldsymbol{G}_{\mathrm{R}}^{\mathrm{T}}\boldsymbol{F}^{\mathrm{H}}, \tag{58}
$$

Here, the optimum weight is represented according to

$$
\beta_{\mathrm{TxWF}}^{-1} = \sqrt{\frac{E_{\mathrm{Tx}}}{\mathrm{tr}\left(\left(\boldsymbol{H}_0^{\mathrm{H}}\boldsymbol{G}_{\mathrm{R}}^{\mathrm{T}}\boldsymbol{G}_{\mathrm{R}}\boldsymbol{H}_0 + \boldsymbol{H}_1^{\mathrm{H}}\boldsymbol{G}_{\mathrm{R}}^{\mathrm{T}}\boldsymbol{G}_{\mathrm{R}}\boldsymbol{H}_1 + \frac{\sigma_\eta^2 N_{\mathrm{c}}}{E_{\mathrm{Tx}}}\mathbf{1}\right)^{-2}\boldsymbol{H}_0^{\mathrm{H}}\boldsymbol{G}_{\mathrm{R}}^{\mathrm{T}}\boldsymbol{G}_{\mathrm{R}}\boldsymbol{H}_0\right)}}. \tag{59}
$$

It can be easily verified that Equation (50) holds true when Equation (58) and (59) are substituted into Equation (50).

The optimum linear filter structure $\tilde{\boldsymbol{P}}$ of Equation (58) applies the Inverse Fast Fourier Transform IFFT first to transform the signal from the frequency domain to the time domain. Then, the time domain representation of the filter input is processed. In order to emphasize this point, according to the present invention the time-domain filter $P$ is represented according to (cf. Equation (58)):

$$\boldsymbol{P} = \beta_{\mathrm{TxWF}}^{-1} \left( \boldsymbol{H}_0^{\mathrm{H}} \boldsymbol{G}_{\mathrm{R}}^{\mathrm{T}} \boldsymbol{G}_{\mathrm{R}} \boldsymbol{H}_0 + \boldsymbol{H}_1^{\mathrm{H}} \boldsymbol{G}_{\mathrm{R}}^{\mathrm{T}} \boldsymbol{G}_{\mathrm{R}} \boldsymbol{H}_1 + \frac{\sigma_\eta^2 N_{\mathrm{c}}}{E_{\mathrm{Tx}}} \mathbf{1} \right)^{-1} \boldsymbol{H}_0^{\mathrm{H}} \boldsymbol{G}_{\mathrm{R}}^{\mathrm{T}}. \qquad (60)$$

*Transmit Filter with Cyclic Prefix Extention*

Further to the transmit filter without cyclic prefix extension at the transmitter, another preferred embodiment of the present invention relates to a transmit filter with cyclic prefix extension at the transmitter. Again, it is assumed that the structure of the receiver remains unchanged also for this preferred embodiment.

As discussed previously with respect to Fig. 4, according to this further preferred embodiment of the present invention there is introduced an additional filter $\tilde{\boldsymbol{P}}_{\mathrm{w}}$ before the filter chain of the inverse Fast Fourier Transform IFFT and the cyclic prefix CP extension at the transmitter.

To derive the structure of the linear filter according to this preferred embodiment of the present invention the estimated signal $\hat{s}[n]$ at the receiver is represented according to

$$\hat{\boldsymbol{s}}[n] = \boldsymbol{F} \boldsymbol{G}_{\mathrm{R}} \boldsymbol{H}_0 \boldsymbol{G}_{\mathrm{I}} \boldsymbol{F}^{\mathrm{H}} \tilde{\boldsymbol{P}}_{\mathrm{w}} \boldsymbol{s}[n] + \boldsymbol{F} \boldsymbol{G}_{\mathrm{R}} \boldsymbol{H}_1 \boldsymbol{G}_{\mathrm{I}} \boldsymbol{F}^{\mathrm{H}} \tilde{\boldsymbol{P}}_{\mathrm{w}} \boldsymbol{s}[n-1] + \boldsymbol{F} \boldsymbol{G}_{\mathrm{R}} \boldsymbol{\eta}[n]. \quad (61)$$

As for the previous embodiment also this further linear filter structure $\tilde{\boldsymbol{P}}_{\mathrm{w}}$ is derived based on a minimum square error MSE criterion. The derivation is similar to the one outlined above and therefore not repeated in detail here.

From Equation (61) the mean square MSE can be calculated according to

$$\begin{aligned} \varepsilon_{\mathrm{TxWF,w}} &= \mathrm{E}\left[ \| \boldsymbol{s}[n] - \beta_{\mathrm{w}} \hat{\boldsymbol{s}}[n] \|_2^2 \right] \\ &= \beta^2 \mathrm{tr} \left( \tilde{\boldsymbol{P}}_{\mathrm{w}}^{\mathrm{H}} \boldsymbol{F} \boldsymbol{G}_{\mathrm{I}}^{\mathrm{T}} \boldsymbol{H}_0^{\mathrm{H}} \boldsymbol{G}_{\mathrm{R}}^{\mathrm{T}} \boldsymbol{G}_{\mathrm{R}} \boldsymbol{H}_0 \boldsymbol{G}_{\mathrm{I}} \boldsymbol{F}^{\mathrm{H}} \tilde{\boldsymbol{P}}_{\mathrm{w}} \right) \\ &\quad + \beta^2 \mathrm{tr} \left( \tilde{\boldsymbol{P}}_{\mathrm{w}}^{\mathrm{H}} \boldsymbol{F} \boldsymbol{G}_{\mathrm{I}}^{\mathrm{T}} \boldsymbol{H}_1^{\mathrm{H}} \boldsymbol{G}_{\mathrm{R}}^{\mathrm{T}} \boldsymbol{G}_{\mathrm{R}} \boldsymbol{H}_1 \boldsymbol{G}_{\mathrm{I}} \boldsymbol{F}^{\mathrm{H}} \tilde{\boldsymbol{P}}_{\mathrm{w}} \right) \\ &\quad - 2\beta \mathrm{Re} \left\{ \mathrm{tr} \left( \boldsymbol{F} \boldsymbol{G}_{\mathrm{R}} \boldsymbol{H}_0 \boldsymbol{G}_{\mathrm{I}} \boldsymbol{F}^{\mathrm{H}} \tilde{\boldsymbol{P}}_{\mathrm{w}} \right) \right\} + \beta^2 \sigma_\eta^2 N_{\mathrm{c}} + N_{\mathrm{c}}. \end{aligned} \qquad (62)$$

The constraint of the transmit power is represented according to

$$\mathrm{E}\left[ \left\| \boldsymbol{G}_{\mathrm{I}} \boldsymbol{F}^{\mathrm{H}} \tilde{\boldsymbol{P}}_{\mathrm{w}} \boldsymbol{s}[n] \right\|_2^2 \right] = \mathrm{tr} \left( \tilde{\boldsymbol{P}}_{\mathrm{w}}^{\mathrm{H}} \boldsymbol{F} \boldsymbol{G}_{\mathrm{I}}^{\mathrm{T}} \boldsymbol{G}_{\mathrm{I}} \boldsymbol{F}^{\mathrm{H}} \tilde{\boldsymbol{P}}_{\mathrm{w}} \right) = E_{\mathrm{Tx}}. \qquad (63)$$

From Equation (62) and (63) the optimization problem for derivation of an optimum linear filter structure according to this preferred embodiment of the present invention is represented according to

$$\left[\tilde{P}_{\rm w}, \beta_{\rm TxWF,w}\right] = \arg\min_{\tilde{P}'_{w},\beta} \varepsilon_{\rm TxWF,w} \qquad \text{s.t.:} \quad \operatorname{tr}\left(\tilde{P}'^{\rm H}_{\rm w} F G_{\rm I}^{\rm T} G_{\rm I} F^{\rm H} \tilde{P}'_{\rm w}\right) = E_{\rm Tx}. \tag{64}$$

By solving this optimization problem the result will be

$$\tilde{P}_{\rm w} = \beta^{-1}_{\rm TxWF,w} F \left(G_{\rm I}^{\rm T} H_0^{\rm H} G_{\rm R}^{\rm T} G_{\rm R} H_0 G_{\rm I} + G_{\rm I}^{\rm T} H_1^{\rm H} G_{\rm R}^{\rm T} G_{\rm R} H_1 G_{\rm I} + \frac{\sigma_\eta^2 N_{\rm c}}{E_{\rm Tx}} G_{\rm I}^{\rm T} G_{\rm I}\right)^{-1} G_{\rm I}^{\rm T} H_0^{\rm H} G_{\rm R}^{\rm T} F^{\rm H}, \tag{65}$$

where the optimum weight is

$$\beta^{-1}_{\rm TxWF,w} = \sqrt{\frac{E_{\rm Tx}}{\operatorname{tr}\left(\left(G_{\rm I}^{\rm T} H_0^{\rm H} G_{\rm R}^{\rm T} G_{\rm R} H_0 G_{\rm I} + G_{\rm I}^{\rm T} H_1^{\rm H} G_{\rm R}^{\rm T} G_{\rm R} H_1 G_{\rm I} + \frac{\sigma_\eta^2 N_{\rm c}}{E_{\rm Tx}} G_{\rm I}^{\rm T} G_{\rm I}\right)^{-2} G_{\rm I}^{\rm T} H_0^{\rm H} G_{\rm R}^{\rm T} G_{\rm R} H_0 G_{\rm I}\right)}}. \tag{66}$$

Therefore, the optimum filter structure $\tilde{\boldsymbol{P}}_{\rm w}$ according to Equation (65) relies on a transformation of the OFDM signal from the frequency domain to the time domain before application of the linear filter structure. After the linear filtering process the filter output is transformed back to the frequency domain. However, the Fast Fourier Transform FFT appearing on the left side of Equation (65) is canceled out considering the next Inverse Fast Fourier Transform IFFT as applied in standard OFDM multicarrier systems. For this reason the resulting time-domain linear filter structure may be represented according to

$$P_{\rm w} = \beta^{-1}_{\rm TxWF,w} \left(G_{\rm I}^{\rm T} H_0^{\rm H} G_{\rm R}^{\rm T} G_{\rm R} H_0 G_{\rm I} + G_{\rm I}^{\rm T} H_1^{\rm H} G_{\rm R}^{\rm T} G_{\rm R} H_1 G_{\rm I} + \frac{\sigma_\eta^2 N_{\rm c}}{E_{\rm Tx}} G_{\rm I}^{\rm T} G_{\rm I}\right)^{-1} G_{\rm I}^{\rm T} H_0^{\rm H} G_{\rm R}^{\rm T}. \tag{67}$$

*Derivation of an Analytical Expression of Mean Square Error MSE for Preferred Embodiments of the Present Invention*

Above, an analytical expression for mean square error has been derived for standard OFDM multicarrier systems. In the following a related derivation will be given with respect to preferred embodiments of the present invention for subsequent consideration of improvements achieved through the present invention.

Heretofore, it is assument that the guard interval GI is sufficiently long so that no intersymbol interference is observed at the receiver side. Further, there is included a scalar operation at the receiver side (not shown in Fig. 3 and 4) to normalize reception signal power for mean square error MSE calculation.

For calculating the mean square error MSE for linear filter structures according to preferred embodiments of the present invention, according to the present invention it is assumed that a singular value decomposition SVD of the filter chain $\boldsymbol{G}_{\rm R}\boldsymbol{H}_0$ is represented according to

$$G_R H_0 = U \Sigma V^H, \tag{68}$$

where $U \in C^{N_c \times N_c}$ and $V \in C^{(N_c+N_g)\times(N_c+N_g)}$ are unitary matrices, and $\Sigma$ is a real valued diagonal matrix are represented according to

$$\Sigma = \mathrm{diag}\left(\sigma_1, \ldots, \sigma_{N_c}\right) \in \mathbb{R}^{N_c \times (N_c+N_g)}. \tag{69}$$

In view of this the estimated signals $\bar{s}[n]$ are represented according to

$$\tilde{s}[n] = F U \Sigma^2 \left(\Sigma^2 + \gamma^{-1}\mathbf{1}\right)^{-1} U^H F^H s[n] + \beta_{\mathrm{TxWF}} \tilde{\eta}[n], \tag{70}$$

where $\Sigma^2$ is defined according to

$$\Sigma^2 = \Sigma\Sigma^T = \mathrm{diag}\left(\sigma_1^2, \ldots, \sigma_{N_c}^2\right) \in \mathbb{R}^{N_c \times N_c}, \tag{71}$$

For the explanations to follow, the same assumption applies as for standard OFDM mutlicarrier systems, i.e. $\sigma_s^2 = 1$, the definition of $\gamma$, cf. Equation (43), and

$$E_{\mathrm{Tx}} = \mathrm{E}\left[\|s[n]\|_2^2\right] = \mathrm{tr}\left(\sigma_s^2 \mathbf{1}\right) = N_c. \tag{72}$$

In view of the above, an expression for the mean square error of the linear filter structure is represented according to

$$\varepsilon_{\mathrm{TxWF}} = \mathrm{E}\left[\|\tilde{s}[n] - s[n]\|_2^2\right] = \sum_{k=1}^{N_c} \frac{1}{\gamma\sigma_k^2 + 1}. \tag{73}$$

From Equation (73) it may be seen that the mean square error MSE decreases as the signal to noise ratio SNR $\gamma$ becomes larger. The mean square error MSE also depends on the singular values, $\sigma_k$, $k$ = 1,..., $N_c$, of the filter chain $\boldsymbol{G}_R\boldsymbol{H}_0$. Considering that the filter chain is of Toeplitz structure described by a wide matrix of dimension $N_c \times (N_c + N_g)$ which has full row rank $N_c$, the condition number of the filter chain takes reasonable value. This means that each term in the summation of Equation (73) should not take a large value and the total mean square MSE should be reasonably small compared to the possible spectral nulls of channel for standard OFDM multicarrier systems (cf. Equation (42)).

*Simulation Results*

Computer simulations have been performed in order to evaluate the present invention. In particular, the present invention has been compared against the standard OFDM multicarrier systems in terms of the bit error rate BER and the normalized throughput. Since the main interest is the performance when the maximum delay of the channel exceeds the guard interval GI size, the guard interval GI size is varied while the delay of the channel was kept constant for simulations.

*Simulation Parameters*

Simulation parameters are summarized in Table 1.

For simulations OFDM multicarrier systems have been considered with $N_c = 64$ subcarriers and a guard interval GI size of $N_g = 0$, 6, and 12. The guard interval GI size $N_g$ is the number of time samples normalized by the number of subcarriers $N_c$. Information bits of each frame are assumed to be encoded by the half rate convolution encoder with memory 4, then interleaved by the random

Table 1: Simulation parameters.

| | |
|---|---|
| # of subcarriers | $N_c = 64$ |
| guard interval | $N_g = 0, 6,12$ |
| modulation | QPSK |
| frame size | 22 OFDM symbols |
| channel coding | $\frac{1}{2}$ convolutional code [23,35], memory 4 |
| interleaver | random interleaver |
| channel | quasi static, 13 paths |
| # of antennas at transmitter | $M = 1, 2$ |
| antenna spacing | half the carrier wave length |

interleaver. Each frame contains 22 OFDM symbols. The output of the interleaver is mapped to QPSK symbols which are signals of subcarriers.

For the simulation purposes a multipath channel model with 13 distinct delays has been applied. In order to see the effects of the long echoes exceeding the guard interval GI, worst case scenario of no decay is considered for the simulations.

For MISO channels multiple antenna elements are deployed at the transmitter. Each antenna element is apart from each other in half the carrier wave length and it is assumed that they are fully correlated. It means that there are strong beams without angular spreads. It is also assumed that each beam is associated with each delay.

*Comparison of Bit Error Rates BER*

The BER performance against $E_b/N_0$ is shown in Fig. 10 to 12, respectively, for a length of the guard interval of $N_g = 12$, 6 and 0.

As shown in Fig. 10 to 12, the performance of the standard OFDM severely degrades as the guard interval GI becomes shorter. On the contrary, for the present invention the degradation is not as severe as the standard OFDM. In more detail, TxWF (M=1) is related to the application of the present invention with a single antenna at the transmitter and a linear filtering structure. Further, TxWF (M=2) is related to the application of the present invention with two antennas at the transmitter and a linear filtering structure.

The transmit linear filtering structure generates output signals longer than input signals due to a margin of the guard interval GI. As outlined above optimization makes use of the margin as degrees of freedom. As shown in Fig. 10 to 12, with two antennas the additional spatial dimension greatly improves the performance even with only one more antenna.

*Comparision of Normalized Throughput*

To compare the throughput for different sizes of the guard interval GI, there is introduced the normalized throughput defined as

$$0 \leq \alpha(1 - \mathrm{BER}) \leq 1, \tag{74}$$

where the scalar α is defined as

$$\alpha = \frac{N_c}{N_c + N_g}. \tag{75}$$

The transmit power is kept constant per time sample for different $N_g$ for fair comparison. Consequently, $E_b/N_0$ increases when using the larger $N_g$ because the number of information bits per OFDM symbol stays the same. Therefore, the normalized throughput is plotted against $\alpha E_b/N_0$.

The results of comparison of normalized throughput for different values of signal to noise ratio parameterized by different values of guard interval length for a multicarrier system using transmit processing according to the present invention are shown in Fig. 13.

As shown in Fig. 13, compared to the standard OFDM multicarrier systems a large gain can be obtained due to the transmit processing using the linear filter structure. For a region of high $E_b/N_0$ the main source of performance degradation is intersymbol interference ISI which is successfully mitigated by the proposed linear filter structures.

As also shown in Fig. 13, for low $E_b/N_0$ the effect of noise with respect to the intersymbol interference ISI cannot be neglected. Thus, mitigating the intersymbol interference ISI by using the guard interval GI helps to retain the throughput, even if the guard interval GI is not sufficiently long for the given maximum delay of the channel.

Further to the above, Figs.14 and 15 show an evaluation of the normalized throughput performance against the size of guard interval. It may be observed that OFDM multicarrier systems are sensitive to the number of guard intervals. The throughput degradation become more severe as the guard interval GI becomes shorter. This tendency is accelerated for the very short guard intervals.

*Comparision of Mean Square Error*

As outlined above, the present invention achieves better performance than the OFDM multicarrier systems even when the guard interval GI is sufficiently long, i.e. when there is not intersymbol interference ISI. Here, the mean square error MSE performance of OFDM and the present invention is evaluated through computer simulations for the case without intersymbol interference. The mean square error MSE is calculated based on the analytical expression which as derived above. For reasons of convenience, these two equations are repeated here according to

$$\varepsilon_{\mathrm{OFDM}} = \gamma^{-1}\left(1 + N_g/N_c\right)\sum_{k=1}^{N_c} |\lambda_k|^{-2} \qquad \text{for OFDM,}$$

and

$$\varepsilon_{\mathrm{TxWF}} = \sum_{k=1}^{N_c} \frac{1}{\gamma\sigma_k^2 + 1} \qquad \text{for TxWF.}$$

From these equations, the mean square error MSE in view of various signal to noise ratios SNR has been calculated for 1000 channel realizations for each signal to noise ratio SNR. Fig. 16 shows a comparison of mean square error performance for different values of signal to noise ratio.

As shown in Fig. 16, the mean square error MSE achieved according to the present invention is always smaller than that of standard OFDM mutlicarrier systems. For different signal to noise ratios SNR, the mean square error MSE of standard OFDM multicarrier systems increases linearly as the signal to noise ratio SNR becomes smaller. Further, no lower limits or equivalently floor-values for the mean square error MSE exist for low signal to noise ratio SNR values.

On the contrary, it is clear from the mean square error MSE expression for the linear filter strucuture according to the present invention that the mean square error MSE converges to $N_c$ for low signal to noise ratio SNR values. This result can be better understood by evaluating $\lambda_k$ and $\sigma_k$.

Since the mean square error MSE depends on channel frequency responses $\lambda_k$ and singular values $\sigma_k$ for standard OFDM multicarrier systems and for filter structures according to the present invention, respectively, also the maximum and minimum as well as its ratios of these values have been calculated and summarized in Table (2). The related values are calculated from 1000 channel realizations.

Table 2: Analytical expressions of MSE for OFDM and TxWF and measured maximum, minimum, and its ratios of channel frequency responses and singular values.

| | min $\|\lambda_k\|^2$ or $\sigma_k^2$ | max $\|\lambda_k\|^2$ or $\sigma_k^2$ | max{max/min} |
|---|---|---|---|
| OFDM | $\|\lambda_k\|^2_{\max} = 10.47$ | $\|\lambda_k\|^2_{\min} = 8.85 \times 10^{-6}$ | $\max\left\{\frac{\|\lambda_k\|^2_{\max}}{\|\lambda_k\|^2_{\min}}\right\} = 5.25 \times 10^5$ |
| TxWF | $\sigma^2_{k,\max} = 10.50$ | $\sigma^2_{k,\min} = 7.34 \times 10^{-4}$ | $\max\left\{\frac{\sigma^2_{k,\max}}{\sigma^2_{k,\min}}\right\} = 6.74 \times 10^3$ |

From Table 2, it can be seen that although the maximum values of $|\lambda_k|^2$ and $\sigma_k^2$ are similar, their minimum values are different in the order of 2. The same is true for its maximum ratios. Because the mean square error MSE is dependent on the reciprocal of these values, OFDM mutlicarrier systems yield a high mean square error MSE when some subcarriers hit nulls of the channel frequency responses, i.e. when $|\lambda_k|^2$ takes extremely small value nearly zero for the subcarrier *k*.

Further, the mean square error MSE as achieved according to the present invention depends on the singular values of the filter chain $\boldsymbol{G}_R\boldsymbol{H}_0$ which is a wide matrix and thus always has full row rank analytically and is more stable in numerically than the diagonal entries of channel frequency responses of OFDM multicarrier systems.

## Claims

**1.** Filtering method for transmit processing in orthogonal frequency division multiplex communication systems, comprising the steps:

deriving (S10) a linear filter structure for processing of at least one orthogonal frequency transmission symbol ($s[n]$) using channel state information, a constraint on transmission power, and a minimum mean square error criterion between an orthogonal frequency transmission symbol ($s[n]$) and a related estimated received orthogonal frequency transmission symbol ($\hat{s}[n]$) at the time of deriving the linear filter structure, wherein receiving said orthogonal frequency transmission symbol ($s[n]$) at the receiver side is independent from said linear filter structure;

receiving (S12) at least one orthogonal frequency transmission symbol ($s[n]$) transformed from frequency domain into time domain as filter input vector; and

filtering (S14) the filter input vector for output of a transmission symbol vector minimizing the mean square error criterion and using a transmission power according to the constraint on transmission power.

**2.** Filtering method according to claim 1, **characterized in that** the transmission symbol vector is transmitted via a single antenna and that the filtering step (S14) uses degrees of freedom in time available through extension of vector dimension from the filter input vector to the transmission symbol vector.

**3.** Filtering method according to claim 1, **characterized in that** a plurality of transmission symbol vectors are transmitted via multiple antennas and that the filtering step (S14) uses degrees of freedom in time and space available through extension of dimension from the filter input vector to multiple transmission symbol vectors and through generation of a plurality of transmission symbol vectors with respect to the multiple antennas.

**4.** Filtering method according to one of the claims 1 to 3, **characterized in that** the linear filtering (S14) comprises the steps scaling of transmission power (S20), transmission channel matching (S22), and conditioning of filter input vector for interference/noise cancellation (S24).

**5.** Filtering method according to claim 4, **characterized in that** the linear filter structure is derived according to

$$P = \beta_{\mathrm{TxWF}}^{-1}\left(H_0^{\mathrm{H}} G_{\mathrm{R}}^{\mathrm{T}} G_{\mathrm{R}} H_0 + H_1^{\mathrm{H}} G_{\mathrm{R}}^{\mathrm{T}} G_{\mathrm{R}} H_1 + \frac{\sigma_\eta^2 N_c}{E_{\mathrm{Tx}}} 1\right)^{-1} H_0^{\mathrm{H}} G_{\mathrm{R}}^{\mathrm{T}}$$

wherein

$\beta_{\mathrm{TxWF}}^{-1}$ is the optimum weight for transmission power control;
$H_0$ is a channel convolution matrix representing channel state information at the time of deriving the linear filter structure;
$H$ is the Hermetian transpose operator;
$T$ is the transpose operator;
$G_R$ is a cyclic prefix removal matrix;
$H_1$ a channel convolution matrix representing channel state information at a time before deriving the linear filter structure for consideration of intersymbol interference;
$\sigma_\eta^2$ is the variance of noise superimposed during transmission over subcarriers of the orthogonal frequency division multiplex communication system;
$N_c$ is the number of subcarrier used in the orthogonal frequency division multiplex communication system;
$E_{Tx}$ is the transmission power available for transmission of transmission symbol vectors; and
$()^{-1}$ is a matrix inversion operator.

**6.** Filtering method according to claim 5, **characterized in that** the optimum weight for transmission power control is determined according to

$$\beta_{\mathrm{TxWF}}^{-1} = \sqrt{\frac{E_{\mathrm{Tx}}}{\mathrm{tr}\left(\left(H_0^{\mathrm{H}} G_{\mathrm{R}}^{\mathrm{T}} G_{\mathrm{R}} H_0 + H_1^{\mathrm{H}} G_{\mathrm{R}}^{\mathrm{T}} G_{\mathrm{R}} H_1 + \frac{\sigma_\eta^2 N_c}{E_{\mathrm{Tx}}} 1\right)^{-2} H_0^{\mathrm{H}} G_{\mathrm{R}}^{\mathrm{T}} G_{\mathrm{R}} H_0\right)}}$$

wherein tr is a trace operator.

**7.** Filtering method according to one of the claims 1 to 4,
**characterized in that** it further comprises the step of cyclic prefix extension of the transmission symbol vectors after filtering (S16).

**8.** Filtering method according to claim 7, **characterized in that** the linear filter structure is derived according to

$$P_w = \beta_{\mathrm{TxWF,w}}^{-1}\left(G_{\mathrm{I}}^{\mathrm{T}} H_0^{\mathrm{H}} G_{\mathrm{R}}^{\mathrm{T}} G_{\mathrm{R}} H_0 G_{\mathrm{I}} + G_{\mathrm{I}}^{\mathrm{T}} H_1^{\mathrm{H}} G_{\mathrm{R}}^{\mathrm{T}} G_{\mathrm{R}} H_1 G_{\mathrm{I}} + \frac{\sigma_\eta^2 N_c}{E_{\mathrm{Tx}}} G_{\mathrm{I}}^{\mathrm{T}} G_{\mathrm{I}}\right)^{-1} G_{\mathrm{I}}^{\mathrm{T}} H_0^{\mathrm{H}} G_{\mathrm{R}}^{\mathrm{T}}$$

wherein

$\beta_{\mathrm{TxWF,w}}^{-1}$ is the optimum weight for transmission power control;

$G_1$ is a guard interval insertion matrix;
$T$ is the transpose operator;
$H_0$ is a channel convolution matrix representing channel state information at the time of deriving the linear filter structure;
$H$ is the Herletian transpose operator;
$G_R$ is a cyclic prefix removal matrix;
$H_1$ a channel convolution matrix representing channel state information at a time before deriving the linear filter structure for consideration of intersymbol interference;

$\sigma_\eta^2$ is the variance of noise superimposed during transmission over subcarriers of the orthogonal frequency division multiplex communication system;
$N_c$ is the number of subcarrier used in the orthogonal frequency division multiplex communication system; and
$E_{Tx}$ is the transmission power available for transmission of transmission symbol vectors; and
$()^{-1}$ is a matrix inversion operator.

**9.** Filtering method according to claim 8, **characterized in that** the optimum weight for transmission power control is determined according to

$$\beta_{TxWF,w}^{-1} = \sqrt{\frac{E_{Tx}}{\mathrm{tr}\left(\left(G_I^T H_0^H G_R^T G_R H_0 G_I + G_I^T H_1^H G_R^T G_R H_1 G_I + \frac{\sigma_\eta^2 N_c}{E_{Tx}} G_I^T G_I\right)^{-2} G_I^T H_0^H G_R^T G_R H_0 G_I\right)}}$$

wherein tr is a trace operator.

**10.** Filtering method according to one of the claims 1 to 9, **characterized in that** the derivation of the linear filter strucutre is re-iterated when channel state information changes (S18).

**11.** Filter apparatus for transmit processing in orthogonal frequency division multiplex communication systems, comprising:

a synthesis unit (14) adapted to derive a linear filter structure for processing of at least one orthogonal frequency transmission symbol (s[n]) using channel state information, a constraint on transmission power, and a minimum mean square error criterion between an orthogonal frequency transmission symbol ($s[n]$) and a related estimated received orthogonal frequency transmission symbol ($\hat{s}[n]$) at the time of deriving the linear filter structure (16), wherein receiving said orthogonal frequency transmission symbol ($s[n]$) at the receiver side is independent from said linear filter structure; wherein
at least one orthogonal frequency transmission symbol ($s[n]$) transformed from the frequency domain into time domain as filter input vector is optimized by the linear filter structure (16) for output of a transmission symbol vector minimizing the mean square error criterion and using a transmission power according to the constraint on transmission power.

**12.** Filter apparatus according to claim 11, **characterized in that** it comprises a single antenna for transmission the transmission symbol vector and that the linear filter structure (16) uses degrees of freedom in time available through extension of vector dimension from the filter input vector to the transmission symbol vector.

**13.** Filter apparatus according to claim 11, **characterized in that** it comprises multiple transmission antennas for transmission of a plurality of transmission symbol vectors and that the linear filter structure (16) uses degrees of freedom in time and space available through extension of dimension from the filter input vector to multiple transmission symbol vectors and through generation of a plurality of transmission symbol vectors with inspect to the multiple antennas.

**14.** Filter apparatus according to one of the claims 11 to 13, **characterized in that** the synthesis unit (14) is adapted to derive the linear filter structure (16) comprising a transmission power scaling unit adapted to scale the transmission power, a channel matching unit adapted to achieve transmission channel matching, and a interference/noise minimization unit adapted to condition the filter input vector for interference/noise minimization.

**15.** Filter apparatus according to claim 14, **characterized in that** the synthesis unit (14) is adapted to derive the linear filter structure (16) according to

$$P = \beta_{TxWF}^{-1}\left(H_0^H G_R^T G_R H_0 + H_1^H G_R^T G_R H_1 + \frac{\sigma_\eta^2 N_c}{E_{Tx}} 1\right)^{-1} H_0^H G_R^T$$

wherein

$\beta_{TxWF}^{-1}$ is the optimum weight for transmission power control;
$H_0$ is a channel convolution matrix representing channel state information at the time of deriving the linear filter structure;
$H$ is the Hermetian transpose operator;
$T$ is the transpose operator;
$G_R$ is a cyclic prefix removal matrix;
$H_1$ a channel convolution matrix representing channel state information at a time before deriving the linear filter structure for consideration of intersymbol interference; ,
$\sigma_\eta^2$ is the variance of noise superimposed during transmission over subcarriers of the orthogonal frequency division multiplex communication system;
$N_c$ is the number of subcarrier used in the orthogonal frequency division multiplex communication system;
$E_{Tx}$ is the transmission power available for transmission of transmission symbol vectors; and
$()^{-1}$ is a matrix inversion operator.

**16.** Filter apparatus according to claim 15, **characterized in that** the synthesis unit (14) is adapted to derive the optimum weight for transmission power control according to

$$\beta_{TxWF}^{-1} = \sqrt{\frac{E_{Tx}}{tr\left(\left(H_0^H G_R^T G_R H_0 + H_1^H G_R^T G_R H_1 + \frac{\sigma_\eta^2 N_c}{E_{Tx}} 1\right)^{-2} H_0^H G_R^T G_R H_0\right)}}$$

wherein tr is a trace operator.

**17.** Filter apparatus according to one of.the claims 11 to 14, **characterized in that** it further comprises a cyclic prefix extension unit adapted to concatenate a cyclic prefix to transmission symbol vectors after filtering.

**18.** Filter apparatus according to claim 17, **characterized in that** the synthesis unit (14) is adapted to derive the linear filter structure according to

$$P_w = \beta_{TxWF,w}^{-1}\left(G_I^T H_0^H G_R^T G_R H_0 G_I + G_I^T H_1^H G_R^T G_R H_1 G_I + \frac{\sigma_\eta^2 N_c}{E_{Tx}} G_I^T G_I\right)^{-1} G_I^T H_0^H G_R^T$$

wherein

$\beta_{TxWF,w}^{-1}$ is the optimum weight for transmission power control;
$G_I$ is a guard interval insertion matrix;

$T$ is the transpose operator;
$H_0$ is a channel convolution matrix representing channel state information at the time of deriving the linear filter structure;
$H$ is the Hermetian transpose operator;
$G_R$ is a cyclic prefix removal matrix;
$H_1$ a channel convolution matrix representing channel state information at a time before deriving the linear filter structure for consideration of intersymbol interference;
$\sigma_\eta^2$ is the variance of noise superimposed during transmission over subcarriers of the orthogonal frequency division multiplex communication system;
$N_c$ is the number of subcarrier used in the orthogonal frequency division multiplex communication system; and
$E_{Tx}$ is the transmission power available for transmission of transmission symbol vectors; and
$()^{-1}$ is a matrix inversion operator.

**19.** Filter apparatus according to claim 18,
**characterized in that** the synthesis unit (14) is adapted to derive the optimum weight for transmission power control according to

$$\beta_{Tx,WF,w}^{-1} = \sqrt{\frac{E_{Tx}}{\mathrm{tr}\left(\left(G_I^T H_0^H G_R^T G_R H_0 G_I + G_I^T H_1^H G_R^T G_R H_1 G_I + \frac{\sigma_\eta^2 N_c}{E_{Tx}} G_I^T G_I\right)^{-2} G_I^T H_0^H G_R^T G_R H_0 G_I\right)}}$$

wherein tr is a trace operator.

**20.** Filter apparatus according to one of the claims 11 to 19, **characterized in that** the synthesis unit (14) is adapted to reiterate derivation of the linear filter structure (S18) when channel state information changes.

**21.** Computer program product directly loadable into the internal memory of a filter apparatus for transmit processing in orthogonal frequency division multiplex communication systems comprising software code portions for performing the steps of one of the claims 1 to 10 when the product is run on a processor of the filter apparatus.

## Patentansprüche

**1.** Filterverfahren zum Übertragungsverarbeiten in einem Orthogonalfrequenzmultiplexkommunikationssystem, mit den Schritten:

Ableiten (S10) einer Linearfilterstruktur zum Verarbeiten von zumindest einem Orthogonalfrequenzübertragungssymbol ($s[n]$) unter Verwendung einer Kanalzustandsinformation, einer Beschränkung auf einer Übertragungsleistung und einem Kleinstdurchschnittsquadratfehlerkriterium zwischen einem Orthogonalfrequenzübertragungssymbol ($s[n]$) und einem zugehörigen, geschätzten, empfangenen Orthogonalfrequenzübertragungssymbol ($\hat{s}[n]$) zu der Zeit eines Ableitens der Linearfilterstruktur, wobei ein Empfangen des Orthogonalfrequenzübertragungssymbols ($s[n]$) an der Empfängerseite unabhängig von der Linearfilterstruktur ist;
Empfangen (S12) zumindest eines Orthogonalfrequenzübertragungssymbols ($s[n]$), das von einer Frequenzdomäne in eine Zeitdomäne transformiert ist, als Filtereingabevektor; und
Filtern (S14) des Filtereingabevektors zur Ausgabe eines Übertragungssymbolvektors, der das Durchschnittsquadratfehlerkriterium minimiert und Verwenden einer Übertragungsleistung gemäß der Beschränkung auf einer Übertragungsleistung.

**2.** Filterverfahren nach Anspruch 1, **dadurch gekennzeichnet, dass** der Übertragungssymbolvektor über eine einzelne Antenne übertragen wird und dass der filternde Schritt (S14) Freiheitsgrade in einer Zeit verwendet, die durch die Erweiterung einer Vektordimension von dem Filtereingabevektor zu dem Übertragungssymbolvektor verfügbar sind.

3. Verfahren nach Anspruch 1, **dadurch gekennzeichnet, dass** eine Vielzahl von Übertragungssymbolvektoren über mehrere Antennen übertragen werden und dass der filternde Schritt (S14) Freiheitsgrade in einer Zeit und einem Raum verwendet, die durch Erweiterung einer Dimension von dem Filtereingabevektor zu mehreren Übertragungssymbolvektoren und durch eine Erzeugung einer Vielzahl von Übertragungssymbolvektoren bezüglich den mehreren Antennen verfügbar sind.

4. Filterverfahren nach einem der Ansprüche 1 bis 3,
**dadurch gekennzeichnet, dass** das lineare Filtern (S14) die Schritte eines Skalierens einer Übertragungsleistung (S20), eines Übertragungskanal-Abgleichens (S22) und eines Festsetzens eines Filtereingabevektors zur Interferenz-/Rauschauslöschung (S24) umfasst.

5. Filterverfahren nach Anspruch 4, **dadurch gekennzeichnet, dass** die Linearfilterstruktur abgeleitet wird gemäß

$$P = \beta_{TxWF}^{-1}\left(H_0^H G_R^T G_R H_0 + H_1^H G_R^T G_R H_1 + \frac{\sigma_\eta^2 N_c}{E_{Tx}} 1\right)^{-1} H_0^H G_R^T,$$

wobei

$\beta_{TxWF}^{-1}$ das Optimalgewicht für eine Übertragungsleistungssteuerung ist;
$H_0$ eine Kanalfaltungsmatrix ist, die Kanalzustandsinformation zu der Zeit eines Ableitens der Linearfilterstruktur darstellt;
$H$ der Hermitesche-Transponieroperator ist;
$T$ der Transponieroperator ist;
$G_R$ eine zyklische Präfixentfernungsmatrix ist;
$H_1$ eine Kanalfaltungsmatrix ist, die eine Kanalzustandsinformation zu einer Zeit vor einem Ableiten der Linearfilterstruktur zur Berücksichtigung einer Intersymbolinterferenz darstellt;
$\sigma_\eta^2$ die Varianz eines Rauschens ist, das während einer Übertragung über Unterträger des Orthogonalfrequenzmultiplexkommunikationssystems überlagert ist;
$N_c$ die Anzahl von Unterträgern ist, die in dem Orthogonalfrequenzmultiplexkommunikationssystem verwendet werden;
$E_{Tx}$ die Übertragungsleistung ist, die für eine Übertragung von Übertragungssymbolvektoren verfügbar ist; und
$()^{-1}$ ein Matrixinvertierungsoperator ist.

6. Filterverfahren nach Anspruch 5, **dadurch gekennzeichnet, dass** das Optimalgewicht zur Übertragungsleistungssteuerung bestimmt wird gemäß

$$\beta_{\mathrm{TxWF}}^{-1} = \sqrt{\frac{E_{Tx}}{tr\left(\left(H_0^H G_R^T G_R H_0 + H_1^H G_R^T G_R H_1 + \frac{\sigma_\eta^2 N_c}{E_{Rx}} 1\right)^{-2} H_0^H G_R^T G_R H_0\right)}}$$

wobei *tr* ein Spuroperator ist.

7. Filterverfahren nach einem der Ansprüche 1 bis 4,
**dadurch gekennzeichnet, dass** dieses weiter den Schritt einer zyklischen Präfixerweiterurig der Übertragungssymbolvektoren nach einem Filtern (S16) umfasst.

**8.** Filterverfahren nach Anspruch 7, **dadurch gekennzeichnet, dass** die Linearfilterstruktur abgeleitet wird gemäß

$$P_w = \beta_{TxWF,w}^{-1} \left( G_I^T H_0^H G_R^T G_R H_0 G_I + G_I^T H_1^H G_R^T G_R H_1 G_I + \frac{\sigma_\eta^2 N_C}{E_{Tx}} G_I^T G_I \right)^{-1} G_I^T H_0^H G_R^T ,$$

wobei

$\beta_{TxWF,w}^{-1}$ das Optimalgewicht für eine Übertragungsleistungssteuerung ist;
$G_I$ eine Führungsintervalleinsatzmatrix ist;
$T$ der Transponieroperator ist;
$H_0$ eine Kanalfaltungsmatrix ist, die Kanalzustandsinformation zu der Zeit eines Ableitens der Linearfilterstruktur darstellt;
$H$ der Hermitesche-Transponieroperator ist;
$G_R$ eine zyklische Präfixentfernungsmatrix ist;
$H_1$ eine Kanalfaltungsmatrix ist, die eine Kanalzustandsinformation zu einer Zeit vor einem Ableiten der Linearfilterstruktur zur Berücksichtigung einer Intersymbolinterferenz darstellt;
$\sigma_\eta^2$ die Varianz eines Rauschens ist, das während einer Übertragung über Unterträger des Orthogonalfrequenzmultiplexkommunikationssystems überlagert ist;
$N_c$ die Anzahl von Unterträgern ist, die in dem Orthogonalfrequenzmultiplexkommunikationssystem verwendet werden;
$E_{Tx}$ die Übertragungsleistung ist, die für eine Übertragung von Übertragungssymbolvektoren verfügbar ist; und
$()^{-1}$ ein Matrixinvertierungsoperator ist.

**9.** Filterverfahren nach Anspruch 8, **dadurch gekennzeichnet, dass** das Optimalgewicht zur Übertragungsleistungssteuerung bestimmt wird gemäß

$$\beta_{TxWF,w}^{-1} =$$

$$\sqrt{\frac{E_{Tx}}{tr\left(\left(G_I^T H_0^H G_R^T G_R H_0 G_I + G_I^T H_1^H G_R^T G_R H_1 G_I + \frac{\sigma_\eta^2 N_c}{E_{Tx}} G_I^T G_I\right)^{-2} G_I^T H_0^R G_R^T G_R H_0 G_I\right)}}$$

wobei *tr* ein Spuroperator ist.

**10.** Filterverfahren nach einem der Ansprüche 1 bis 9,
**dadurch gekennzeichnet, dass** die Ableitung der Linearfilterstruktur reiteriert wird, wenn sich eine Kanalzustandsinformation ändert (S18).

**11.** Filtergerät zum Übertragungsverarbeiten in Orthogonalfrequenzmultiplexkommunikationssystemen, mit:

einer Syntheseeinheit (14), die angepasst ist, eine Linearfilterstruktur zum Verarbeiten von zumindest einem Orthogonalfrequenzübertragungssymbol ($s[n]$) unter Verwendung von Kanalzustandsinformation, eine Beschränkung auf einer Übertragungsleistung und ein Kleinstdurchschnittsquadratfehlerkriterium zwischen einem Orthogonalfrequenzübertragungssymbol ($s[n]$) und einem zugehörigen, geschätzten, empfangenen Orthogonalfrequenzübertragungssymbol ($\hat{s}[n]$) zu der Zeit eines Ableitens der Linearfilterstruktur (16) abzuleiten, wobei ein Empfangen des Orthogonalfrequenzübertragungssymbols ($s[n]$) an der Empfängerseite unabhängig von der Linearfilterstruktur ist; wobei

zumindest ein Orthogonalfrequenzübertragungssymbol ($s[n]$), das von der Frequenzdomäne in die Zeitdomäne transformiert ist, als ein Filtereingabevektor durch die Linearfilterstruktur (16) zur Ausgabe eines Übertragungssymbolvektors optimiert wird, der das Durchschnittsquadratfehlerkriterium minimiert und Verwenden einer Übertragungsleistung gemäß der Beschränkung auf einer Übertragungsleistung.

**12.** Filtergerät nach Anspruch 11, **dadurch gekennzeichnet, dass** dieses eine einzelne Antenne zur Übertragung des Übertragungssymbolvektors umfasst und dass die Linearfilterstruktur (16) Freiheitsgrade in einer Zeit verwendet, die durch eine Erweiterung einer Vektordimension von dem Filtereingabevektor zu dem Übertragungssymbolvektor verfügbar ist.

**13.** Filtergerät nach Anspruch 11, **dadurch gekennzeichnet, dass** dieses mehrere Übertragungsantennen zur Übertragung einer Vielzahl von Übertragungssymbolvektoren umfasst, und dass die Linearfilterstruktur (16) Freiheitsgrade in einer Zeit und einem Raum verwendet, die durch Erweiterung einer Dimension von dem Filtereingabevektor zu mehreren Übertragungssymbolvektoren und durch eine Erzeugung einer Vielzahl von Übertragungssymbolvektoren bezüglich den mehreren Antennen verfügbar sind.

**14.** Filtergerät nach einem der Ansprüche 11 bis 13, **dadurch gekennzeichnet, dass** die Syntheseeinheit (14) angepasst ist, die Linearfilterstruktur (16) mit einer Übertragungsleistungsskaliereinheit, die angepasst ist, die Übertragungsleistung zu skalieren, einer Kanalanpassungseinheit, die angepasst ist, eine Übertragungskanalanpassung zu erreichen und einer Interferenz-/Rauschminimierungseinheit abzuleiten, die angepasst ist, den Filtereingabevektor zur Interferenz-/Rauschminimierung festzusetzen.

**15.** Filtergerät nach Anspruch 14, **dadurch gekennzeichnet, dass** die Syntheseeinheit (14) angepasst ist, die Linearfilterstruktur (16) abzuleiten, gemäß

$$P = \beta_{TxWF}^{-1}\left( H_0^H G_R^T G_R H_0 + H_1^H G_R^T G_R H_1 + \frac{\sigma_\eta^2 N_c}{E_{Tx}} 1 \right)^{-1} H_0^H G_R^T ,$$

wobei

$\beta_{TxWF}^{-1}$ das Optimalgewicht für eine Übertragungsleistungssteuerung ist;
$H_0$ eine Kanalfaltungsmatrix ist, die Kanalzustandsinformation zu der Zeit eines Ableitens der Linearfilterstruktur darstellt;
$H$ der Hermitesche-Transponieroperator ist;
$T$ der Transponieroperator ist;
$G_R$ eine zyklische Präfixentfernungsmatrix ist;
$H_1$ eine Kanalfaltungsmatrix ist, die eine Kanalzustandsinformation zu einer Zeit vor einem Ableiten der Linearfilterstruktur zur Berücksichtigung einer Intersymbolinterferenz darstellt;
$\sigma_\eta^2$ die Varianz eines Rauschens ist, das während einer Übertragung über Unterträger des Orthogonalfrequenzmultiplexkommunikationssystems überlagert ist;
$N_c$ die Anzahl von Unterträgern ist, die in dem Orthogonalfrequenzmultiplexkommunikationssystem verwendet werden;
$E_{Tx}$ die Übertragungsleistung ist, die für eine Übertragung von Übertragungssymbolvektoren verfügbar ist; und
$()^{-1}$ ein Matrixinvertierungsoperator ist.

**16.** Filtergerät nach Anspruch 15, **dadurch gekennzeichnet, dass** die Syntheseeinheit (14) angepasst ist, das Optimalgewicht zur Übertragungsleistungssteuerung abzuleiten, gemäß

$$\beta_{\mathrm{TxWF}}^{-1} = \sqrt{\frac{E_{Tx}}{tr\left(\left(H_0^H G_R^T G_R H_0 + H_1^H G_R^T G_R H_1 + \frac{\sigma_\eta^2 N_c}{E_{Rx}} 1\right)^{-2} H_0^H G_R^T G_R H_0\right)}}$$

wobei *tr* ein Spuroperator ist.

**17.** Filtergerät nach einem der Ansprüche 11 bis 14, **dadurch gekennzeichnet, dass** dieses eine zyklische Präfixerweiterungseinheit umfasst, die angepasst ist, ein zyklisches Präfix mit Übertragungssymbolvektoren nach einem Filtern zu verknüpfen.

**18.** Filtergerät nach Anspruch 17, **dadurch gekennzeichnet, dass** die Syntheseeinheit (14) angepasst ist, die Linearfilterstruktur abzuleiten, gemäß

$$P_w = \beta_{TxWF,w}^{-1}\left(G_I^T H_0^H G_R^T G_R H_0 G_I + G_I^T H_1^H G_R^T G_R H_1 G_I + \frac{\sigma_\eta^2 N_C}{E_{Tx}} G_I^T G_I\right)^{-1} G_I^T H_0^H G_R^T,$$

wobei

$\beta_{TxWF,w}^{-1}$ das Optimalgewicht für eine Übertragungsleistungssteuerung ist;
$G_I$ eine Führungsintervalleinsatzmatrix ist;
$T$ der Transponieroperator ist;
$H_0$ eine Kanalfaltungsmatrix ist, die Kanalzustandsinformation zu der Zeit eines Ableitens der Linearfilterstruktur darstellt;
$H$ der Hermitesche-Transponieroperator ist;
$G_R$ eine zyklische Präfixentfernungsmatrix ist;
$H_1$ eine Kanalfaltungsmatrix ist, die eine Kanalzustandsinformation zu einer Zeit vor einem Ableiten der Linearfilterstruktur zur Berücksichtigung einer Intersymbolinterferenz darstellt;
$\sigma_\eta^2$ die Varianz eines Rauschens ist, das während einer Übertragung über Unterträger des Orthogonalfrequenzmultiplexkommunikationssystems überlagert ist;
$N_c$ die Anzahl von Unterträgern ist, die in dem Orthogonalfrequenzmultiplexkommunikationssystem verwendet werden;
$E_{Tx}$ die Übertragungsleistung ist, die für eine Übertragung von Übertragungssymbolvektoren verfügbar ist; und
$()^{-1}$ ein Matrixinvertierungsoperator ist.

**19.** Filtergerät nach Anspruch 18, **dadurch gekennzeichnet, dass** die Syntheseeinheit (14) angepasst ist, das Optimalgewicht für eine Übertragungsleistungssteuerung abzuleiten, gemäß

$$\beta_{TxWF,w}^{-1} =$$

$$\sqrt{\frac{E_{Tx}}{tr\left(\left(G_I^T H_0^H G_R^T G_R H_0 G_I + G_I^T H_1^H G_R^T G_R H_1 G_I + \frac{\sigma_\eta^2 N_c}{E_{Tx}} G_I^T G_I\right)^{-2} G_I^T H_0^R G_R^T G_R H_0 G_I\right)}}$$

wobei *tr* ein Spuroperator ist.

**20.** Filtergerät nach einem der Ansprüche 11 bis 19, **dadurch gekennzeichnet, dass** die Syntheseeinheit (14) angepasst ist, die Ableitung der Linearfilterstruktur (S18) zu reiterieren, wenn sich eine Kanalzustandsinformation ändert.

**21.** Computerprogrammprodukt, das direkt in dem internen Speicher eines Filtergerätes zum Übertragungsverarbeiten in Orthogonalfrequenzmultiplexkommunikationssystemen ladbar ist, mit Softwarecodeteilen zum Durchführen der Schritte eines der Ansprüche 1 bis 10, wenn das Produkt auf einem Prozessor des Filtergerätes laufengelassen wird.

**Revendications**

**1.** Procédé de filtrage pour le traitement de transmission dans des systèmes de communication de multiplexage par répartition orthogonale de la fréquence, comprenant les étapes consistant à :

dériver (S10) une structure de filtre linéaire pour le traitement d'au moins un symbole (s[n]) de transmission orthogonale de la fréquence utilisant une information d'état d'un canal, une contrainte sur la puissance de transmission, et un critère d'erreur quadratique moyenne minimale entre un symbole (s[n]) de transmission orthogonale de la fréquence et un symbole reçu estimé apparenté ($\hat{s}$[n]) de transmission orthogonale de la fréquence au moment de dériver la structure de filtre linéaire, dans lequel la réception dudit symbole (s[n]) de transmission orthogonale de la fréquence du côté du récepteur est indépendante de ladite structure de filtre linéaire ;
recevoir (S12) au moins un symbole (s[n]) de transmission orthogonale de la fréquence transformé d'un domaine de fréquence en un domaine de temps comme vecteur d'entrée de filtre ; et
filtrer (S14) le vecteur d'entrée de filtre.pour sortir un vecteur de symbole de transmission minimisant le critère d'erreur quadratique moyenne et utilisant une puissance de transmission en fonction de la contrainte de la puissance de transmission.

**2.** Procédé de filtrage selon la revendication 1, **caractérisé en ce que** le vecteur de symbole de transmission est transmis via une seule antenne et **en ce que** l'étape de filtrage (S14) utilise des degrés de liberté dans le temps disponibles par l'extension de la dimension du vecteur depuis le vecteur d'entrée du filtre vers le vecteur de symbole de transmission.

**3.** Procédé de filtrage selon la revendication 1, **caractérisé en ce que** plusieurs vecteurs de symboles de transmission sont transmis via de multiples antennes et **en ce que** l'étape de filtrage (S14) utilise des degrés de liberté dans le temps et dans l'espace disponibles par l'extension de dimension depuis le vecteur d'entrée du filtre vers de multiples vecteurs de symboles de transmission et par la génération de plusieurs vecteurs de symboles de transmission correspondant aux multiples antennes.

**4.** Procédé de filtrage selon une des revendications 1 à 3, **caractérisé en ce que** le filtrage linéaire (S14) comprend les étapes d'échelonnement (S20) de la puissance de transmission, de mise en correspondance (S22) du canal de transmission, et de conditionnement (S24) du vecteur d'entrée du filtre pour une annulation de l'interférence/bruit.

**5.** Procédé de filtrage selon la revendication 4, **caractérisé en ce que** la structure de filtre linéaire est dérivée selon la formule

$$P = \beta^{-1}{}_{TxWF} \left( H^{H}{}_{0} G^{T}{}_{R} G_{R} H_{0} + H^{H}{}_{1} G^{T}{}_{R} G_{R} H_{1} + \frac{\sigma^{2}{}_{\eta} \; N_{c}}{E_{Tx}} 1 \right)^{-1} H^{H}{}_{0} G^{T}{}_{R}$$

dans laquelle
$\beta^{-1}{}_{TxWF}$ est le poids optimal pour le contrôle de la puissance de transmission ;
$H_0$ est une matrice de convolution de canal représentant une information d'état de canal au moment de dériver la structure du filtre linéaire ;
*H* est l'opérateur de transposition Hermétien ;
*T* est l'opérateur de transposition ;
$G_R$ est une matrice de suppression de préfixe cyclique ;
$H_1$ est une matrice de convolution de canal représentant une information d'état de canal à un moment précédent la dérivation de la structure du filtre linéaire pour la prise en compte de l'interférence entre symboles ;
$\sigma^2{}_\eta$ est la variance de bruit superposé pendant la transmission à travers des sous-porteuses du système de communication de multiplexage par répartition orthogonale de la fréquence ;
$N_c$ est le nombre de sous-porteuses utilisées dans le système de communication de multiplexage par répartition orthogonale de la fréquence ;
$E_{Tx}$ est la puissance de transmission disponible pour la transmission de vecteurs de symboles de transmission ; et
$()^{-1}$ est un opérateur d'inversion de matrice.

**6.** Procédé de filtrage selon la revendication 5, **caractérisé en ce que** le poids optimal pour le contrôle de la puissance de transmission est déterminé selon la formule

$$\beta^{-1}{}_{TxWF} = \sqrt{\frac{E_{Tx}}{tr\left[ \left( H^{H}{}_{0} G^{T}{}_{R} G_{R} H_{0} + H^{H}{}_{1} G^{T}{}_{R} G_{R} H_{1} + \frac{\sigma^{2}{}_{\eta} \; N_{c}}{E_{Tx}} 1 \right)^{-2} H^{H}{}_{0} G^{T}{}_{R} G_{R} H_{0} \right]}}$$

où tr est un opérateur de trace.

**7.** Procédé de filtrage selon une des revendications 1 à 4, **caractérisé en ce qu'**il comprend en outre l'étape d'extension d'un préfixe cyclique des vecteurs de symboles de transmission après filtrage (S16).

**8.** Procédé de filtrage selon la revendication 7, **caractérisé en ce que** la structure de filtre linéaire est dérivée selon la formule

$$P_w = \beta^{-1}{}_{TxWFw} \left( G^{T}{}_{I} H^{H}{}_{0} G^{T}{}_{R} G_{R} H_{0} G_{I} + G^{T}{}_{I} H^{H}{}_{1} G^{T}{}_{R} G_{R} H_{1} G_{I} + \frac{\sigma^{2}{}_{\eta} \; N_{c}}{E_{Tx}} G^{T}{}_{I} G_{I} \right)^{-1} G^{T}{}_{I} H^{H}{}_{0} G^{T}{}_{R}$$

dans laquelle
$\beta^{-1}{}_{TxWFw}$ est le poids optimal pour le contrôle de la puissance de transmission ;
$G_I$ est une matrice d'insertion d'intervalle de garde ;
*T* est l'opérateur de transposition ;
$H_0$ est une matrice de convolution de canal représentant une information d'état de canal au moment de dériver la structure du filtre linéaire ;
*H* est l'opérateur de transposition Hermétien ;
$G_R$ est une matrice de suppression de préfixe cyclique ;

$H_1$ est une matrice de convolution de canal représentant une information d'état de canal à un moment précédent la dérivation de la structure du filtre linéaire pour la prise en compte de l'interférence entre symboles ;
$\sigma^2_\eta$ est la variance de bruit superposé pendant la transmission à travers des sous-porteuses du système de communication de multiplexage par répartition orthogonale de la fréquence ;
$N_c$ est le nombre de sous-porteuses utilisées dans le système de communication de multiplexage par répartition orthogonale de la fréquence ; et
$E_{Tx}$ est la puissance de transmission disponible pour la transmission de vecteurs de symboles de transmission ; et
$()^{-1}$ est un opérateur d'inversion de la matrice.

**9.** Procédé de filtrage selon la revendication 8, **caractérisé en ce que** le poids optimal pour le contrôle de la puissance de transmission est déterminé selon la formule

$$\beta^{-1}_{TxWFw} = \sqrt{\frac{E_{Tx}}{tr\left[\left(G^T_I H^H_0 G^T_R G_R H_0 G_I + G^T_I H^H_1 G^T_R G_R H_1 G_I + \frac{\sigma^2_\eta N_c}{E_{Tx}} G^T_I G_I\right)^{-2} G^T_I H^H_0 G^T_R G_R H_0 G_I\right]}}$$

où tr est un opérateur de trace.

**10.** Procédé de filtrage selon une des revendications 1 à 9, **caractérisé en ce que** la dérivation de la structure de filtre linéaire est réitérée lorsque l'information d'état du canal se modifie (S18).

**11.** Appareil de filtrage pour le traitement de transmission dans des systèmes de communication de multiplexage par répartition orthogonale de la fréquence, comprenant :

une unité de synthèse (14) adaptée pour dériver une structure de filtre linéaire pour le traitement d'au moins un symbole (s[n]) de transmission orthogonale de la fréquence utilisant une information d'état d'un canal, une contrainte sur la puissance de transmission, et un critère d'erreur quadratique moyenne minimale entre un symbole (s[n]) de transmission orthogonale de la fréquence et un symbole reçu estimé apparenté ($\hat{s}$[n]) de transmission orthogonale de la fréquence au moment de dériver la structure (16) de filtre linéaire, dans lequel la réception dudit symbole (s[n]) de transmission orthogonale de la fréquence du côté du récepteur est indépendante de ladite structure de filtre linéaire ; dans lequel
au moins un symbole (s[n]) de transmission orthogonale de la fréquence transformé du domaine de fréquence dans le domaine de temps comme vecteur d'entrée de filtre est optimalisé par la structure (16) de filtre linéaire pour sortir un vecteur de symbole de transmission minimisant le critère d'erreur quadratique moyenne et utilisant une puissance de transmission en fonction de la contrainte de la puissance de transmission.

**12.** Appareil de filtrage selon la revendication 11, **caractérisé en ce qu'**il comprend une seule antenne pour la transmission du vecteur de symbole de transmission et **en ce que** la structure (16) de filtre linéaire utilise des degrés de liberté dans le temps disponibles par l'extension de la dimension du vecteur depuis le vecteur d'entrée du filtre vers le vecteur de symbole de transmission.

**13.** Appareil de filtrage selon la revendication 11, **caractérisé en ce qu'**il comprend plusieurs antennes de transmission pour la transmission de plusieurs vecteurs de symboles de transmission et **en ce que** la structure (16) de filtre linéaire utilise des degrés de liberté dans le temps et dans l'espace disponibles par l'extension de dimension depuis le vecteur d'entrée du filtre vers de multiples vecteurs de symboles de transmission et par la génération de plusieurs vecteurs de symboles de transmission correspondant aux multiples antennes.

**14.** Appareil de filtrage selon une des revendications 11 à 13, **caractérisé en ce que** l'unité de synthèse (14) est adaptée pour dériver la structure (16) de filtre linéaire comprenant une unité d'échelonnement de la puissance de transmission adaptée pour échelonner la puissance de transmission, une unité de mise en correspondance de canal adaptée pour effectuer une mise en correspondance du canal de transmission, et une unité de minimisation de l'interférence/bruit adaptée pour conditionner le vecteur d'entrée du filtre pour une minimisation de l'interférence/bruit.

**15.** Appareil de filtrage selon la revendication 14, **caractérisé en ce que** l'unité de synthèse (14) est adaptée pour dériver la structure (16) du filtre linéaire selon la formule

$$P = \beta^{-1}{}_{TxWF} \left( H^{H}{}_{0} G^{T}{}_{R} G_{R} H_{0} + H^{H}{}_{1} G^{T}{}_{R} G_{R} H_{1} + \frac{\sigma^{2}{}_{\eta} \; N_{c}}{E_{Tx}} 1 \right)^{-1} H^{H}{}_{0} G^{T}{}_{R}$$

dans laquelle
$\beta^{-1}{}_{TxWF}$ est le poids optimal pour le contrôle de la puissance de transmission ;
$H_0$ est une matrice de convolution de canal représentant une information d'état de canal au moment de dériver la structure du filtre linéaire ;
$H$ est l'opérateur de transposition Hermétien ;
$T$ est l'opérateur de transposition ;
$G_R$ est une matrice de suppression de préfixe cyclique ;
$H_1$ est une matrice de convolution de canal représentant une information d'état de canal à un moment précédent la dérivation de la structure du filtre linéaire pour la prise en compte de l'interférence entre symboles ;
$\sigma^2{}_\eta$ est la variance de bruit superposé pendant la transmission à travers des sous-porteuses du système de communication de multiplexage par répartition orthogonale de la fréquence ;
$N_c$ est le nombre de sous-porteuses utilisées dans le système de communication de multiplexage par répartition orthogonale de la fréquence ;
$E_{Tx}$ est la puissance de transmission disponible pour la transmission de vecteurs de symboles de transmission ; et
$()^{-1}$ est un opérateur d'inversion de matrice.

**16.** Appareil de filtrage selon la revendication 15, **caractérisé en ce que** l'unité de synthèse (14) est adaptée pour dériver le poids optimal pour le contrôle de la puissance de transmission selon la formule

$$\beta^{-1}{}_{TxWF} = \sqrt{\frac{E_{Tx}}{tr\left[ \left( H^{H}{}_{0} G^{T}{}_{R} G_{R} H_{0} + H^{H}{}_{1} G^{T}{}_{R} G_{R} H_{1} + \frac{\sigma^{2}{}_{\eta} \; N_{c}}{E_{Tx}} 1 \right)^{-2} H^{H}{}_{0} G^{T}{}_{R} G_{R} H_{0} \right]}}$$

où tr est un opérateur de trace.

**17.** Appareil de filtrage selon une des revendications 11 à 14, **caractérisé en ce qu'**il comprend en outre une unité d'extension de préfixe cyclique adaptée pour concaténer un préfixe cyclique vers des vecteurs de symboles de transmission après filtrage.

**18.** Appareil de filtrage selon la revendication 17, **caractérisé en ce que** l'unité de synthèse (14) est adaptée pour dériver la structure de filtre linéaire selon la formule

$$P_w = \beta^{-1}{}_{TxWFw} \left( G^{T}{}_{I} H^{H}{}_{0} G^{T}{}_{R} G_{R} H_{0} G_{I} + G^{T}{}_{I} H^{H}{}_{1} G^{T}{}_{R} G_{R} H_{1} G_{I} + \frac{\sigma^{2}{}_{\eta} \; N_{c}}{E_{Tx}} G^{T}{}_{I} G_{I} \right)^{-1} G^{T}{}_{I} H^{H}{}_{0} G^{T}{}_{R}$$

dans laquelle
$\beta^{-1}_{TxWFw}$ est le poids optimal pour le contrôle de la puissance de transmission ;
$G_I$ est une matrice d'insertion d'intervalle de garde ;
$T$ est l'opérateur de transposition ;
$H_0$ est une matrice de convolution de canal représentant une information d'état de canal au moment de dériver la structure du filtre linéaire ;
$H$ est l'opérateur de transposition Hermétien ;
$G_R$ est une matrice de suppression de préfixe cyclique ;
$H_1$ est une matrice de convolution de canal représentant une information d'état de canal à un moment précédent la dérivation de la structure du filtre linéaire pour la prise en compte de l'interférence entre symboles ;
$\sigma^2_\eta$ est la variance de bruit superposé pendant la transmission à travers des sous-porteuses du système de communication de multiplexage par répartition orthogonale de la fréquence ;
$N_c$ est le nombre de sous-porteuses utilisées dans le système de communication de multiplexage par répartition orthogonale de la fréquence ; et
$E_{Tx}$ est la puissance de transmission disponible pour la transmission de vecteurs de symboles de transmission ; et
$()^{-1}$ est un opérateur d'inversion de la matrice.

**19.** Appareil de filtrage selon la revendication 18, **caractérisé en ce que** l'unité de synthèse (14) est adaptée pour dériver le poids optimal pour le contrôle de la puissance de transmission selon la formule

$$\beta^{-1}_{TxWFw} = \sqrt{\frac{E_{Tx}}{tr\left[\left(G^T_I H^H_0 G^T_R G_R H_0 G_I + G^T_I H^H_1 G^T_R G_R H_1 G_I + \frac{\sigma^2_\eta N_c}{E_{Tx}} G^T_I G_I\right)^{-2} G^T_I H^H_0 G^T_R G_R H_0 G_I\right]}}$$

où tr est un opérateur de trace.

**20.** Appareil de filtrage selon une des revendications 11 à 19, **caractérisé en ce que** l'unité de synthèse (14) est adaptée pour réitérer la dérivation de la structure de filtre linéaire (S18) lorsque l'information d'état du canal se modifie.

**21.** Produit programme d'ordinateur pouvant être chargé directement dans la mémoire interne d'un appareil de filtrage pour un traitement de transmission dans des systèmes de communication de multiplexage par répartition orthogonale de la fréquence comprenant des parties de codes d'un logiciel destiné à effectuer les étapes d'une des revendications 1 à 10 lorsque le produit est exécuté sur un processeur de l'appareil de filtrage.

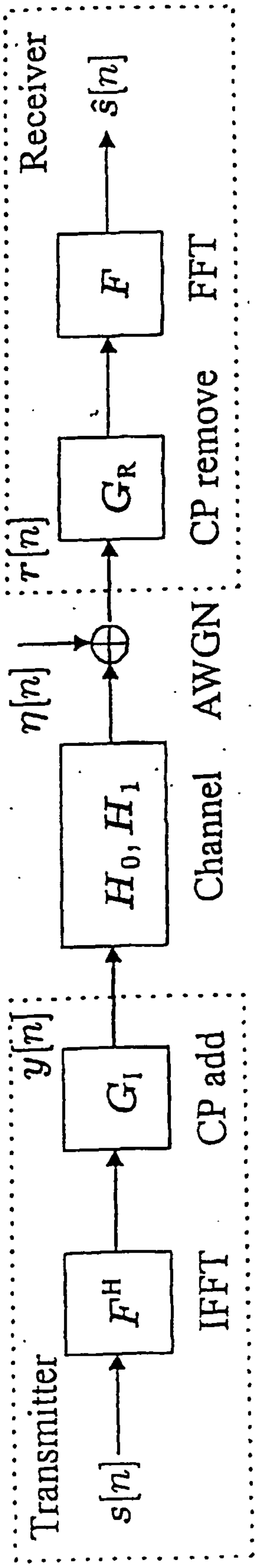
Transmitter
s[n]
F^H
IFFT
G_I
CP add
y[n]
H_0, H_1
Channel
η[n]
AWGN
r[n]
G_R
CP remove
F
FFT
ŝ[n]
Receiver

Fig. 1

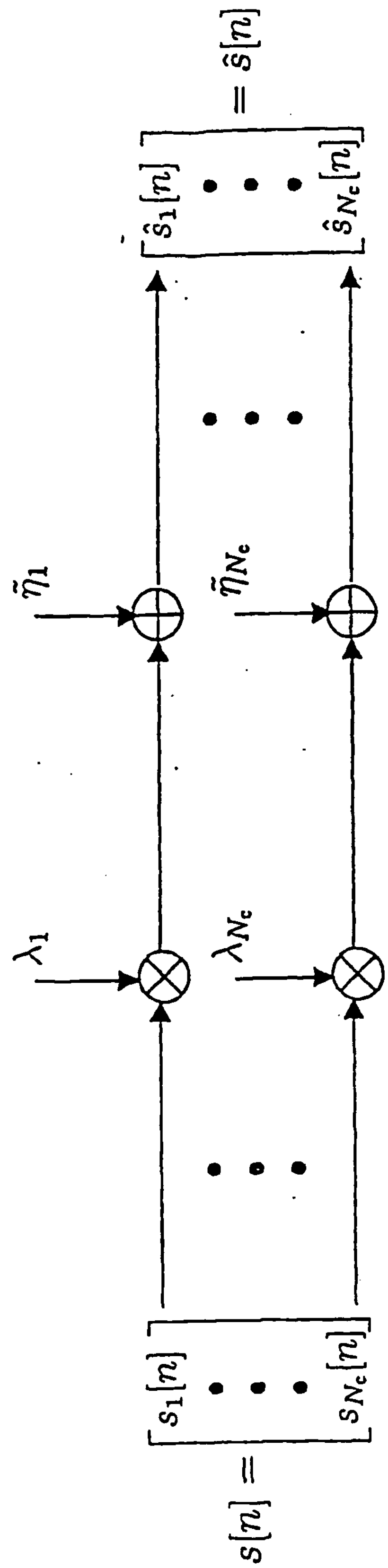
s[n] =
s_1[n]
s_Nc[n]
λ_1
λ_Nc
η̃_1
η̃_Nc
ŝ_1[n]
ŝ_Nc[n]
= ŝ[n]

Fig. 2

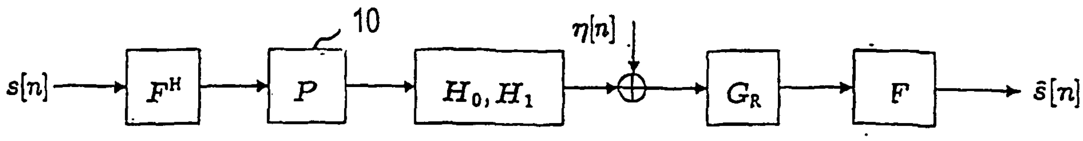


Fig. 3

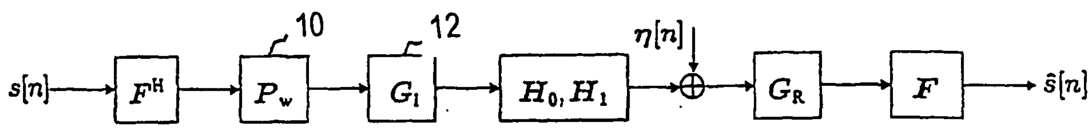


Fig. 4

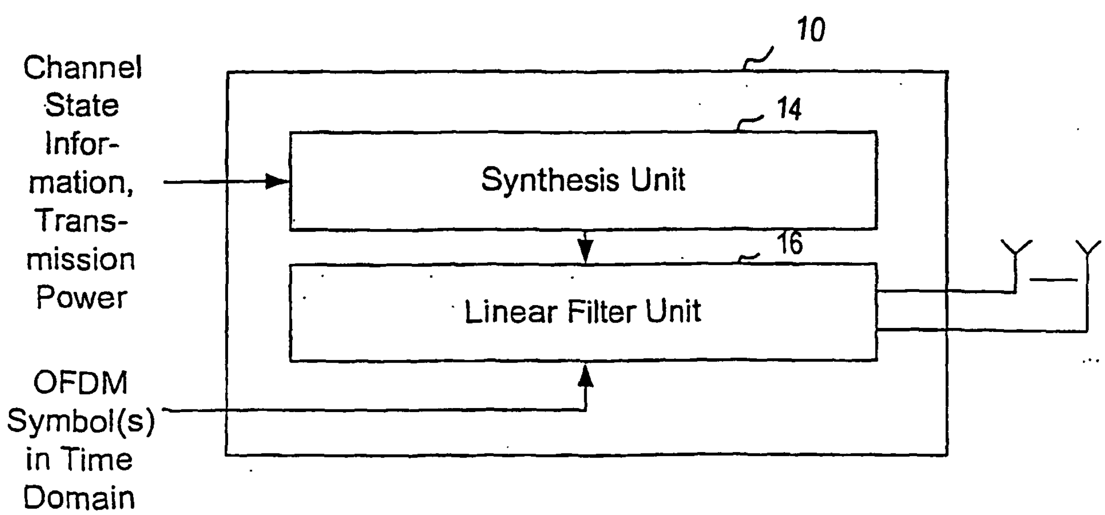


Fig. 5

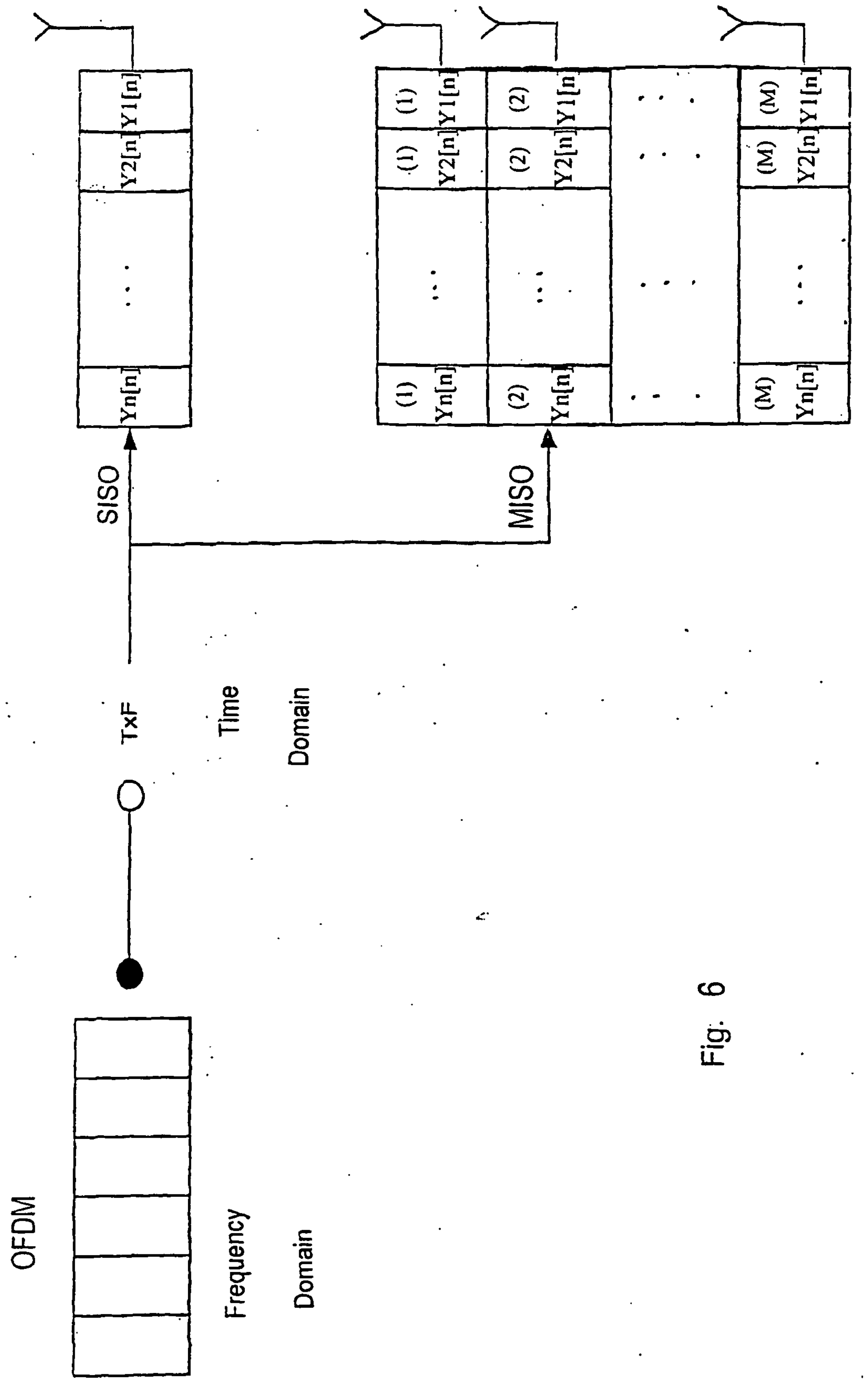
OFDM
Frequency
Domain
TxF
Time
Domain
SISO
MISO
Y1[n]
Y2[n]
Yn[n]
(1)
(2)
(M)

Fig. 6

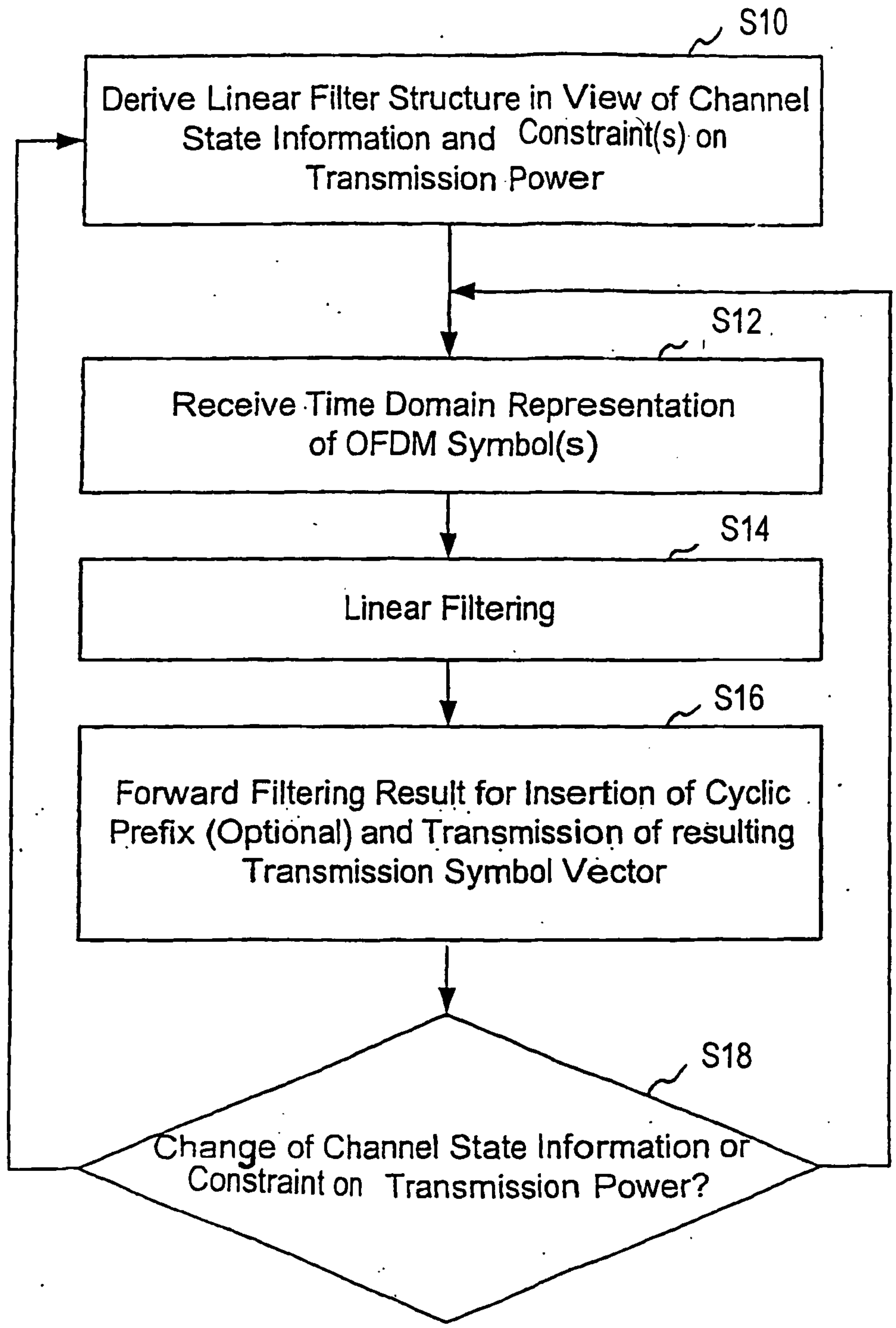
S10
Derive Linear Filter Structure in View of Channel State Information and Constraint(s) on Transmission Power
S12
Receive Time Domain Representation of OFDM Symbol(s)
S14
Linear Filtering
S16
Forward Filtering Result for Insertion of Cyclic Prefix (Optional) and Transmission of resulting Transmission Symbol Vector
S18
Change of Channel State Information or Constraint on Transmission Power?

Fig. 7

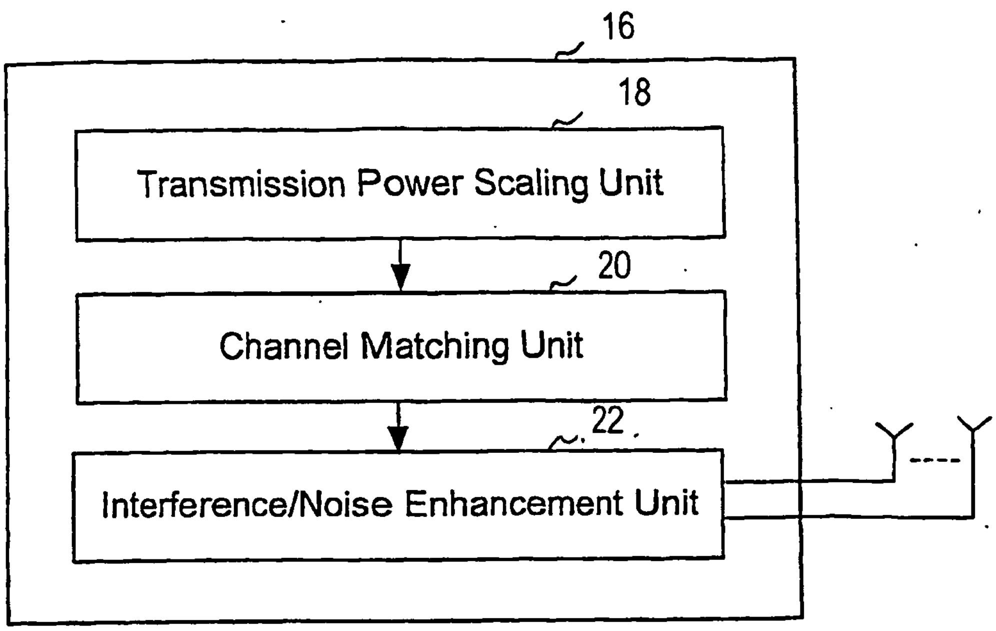
16
18
Transmission Power Scaling Unit
20
Channel Matching Unit
22
Interference/Noise Enhancement Unit

Fig. 8

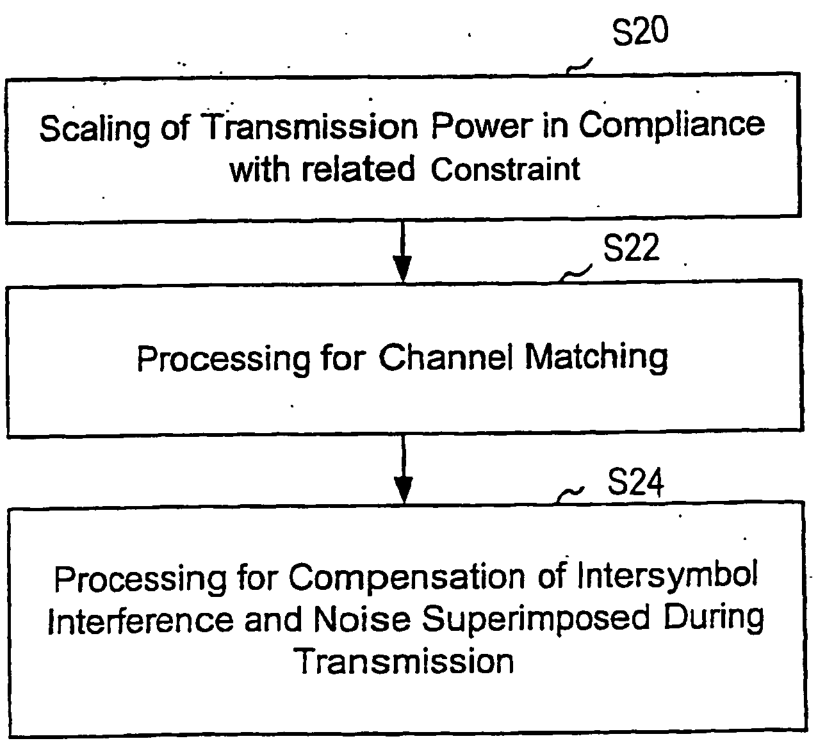
S20
Scaling of Transmission Power in Compliance with related Constraint
S22
Processing for Channel Matching
S24
Processing for Compensation of Intersymbol Interference and Noise Superimposed During Transmission

Fig. 9

Fig. 10

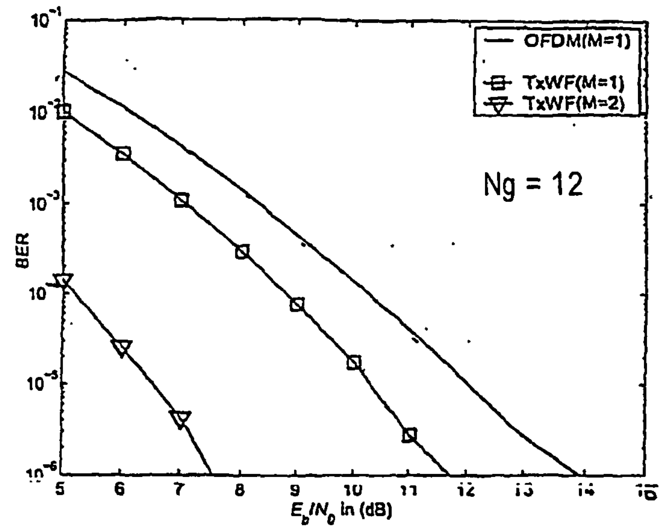


Fig. 11

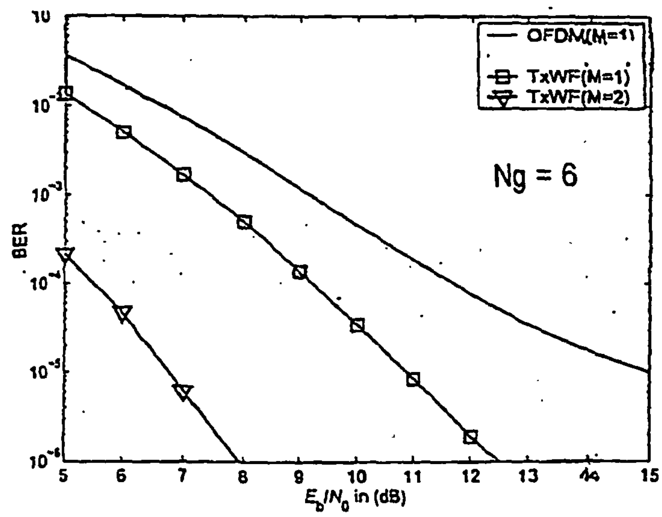


Fig. 12

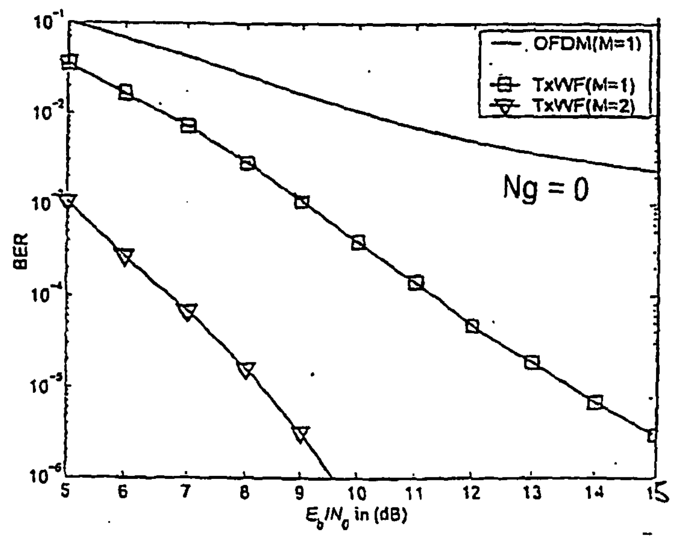

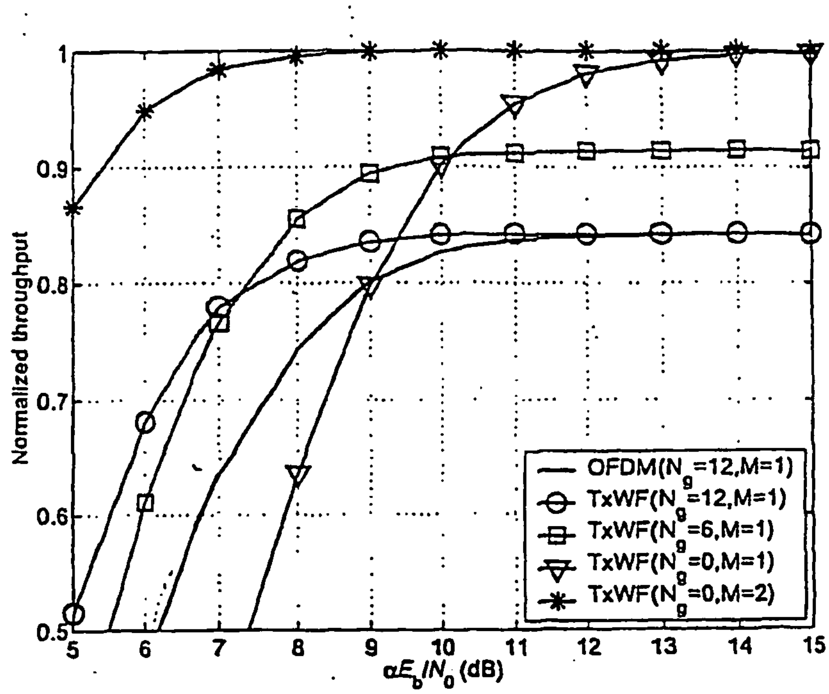
1
0.9
0.8
0.7
0.6
0.5
Normalized throughput
5
6
7
8
9
10
11
12
13
14
15
αE_b/N_0 (dB)
OFDM(N_g=12,M=1)
TxWF(N_g=12,M=1)
TxWF(N_g=6,M=1)
TxWF(N_g=0,M=1)
TxWF(N_g=0,M=2)

Fig. 13

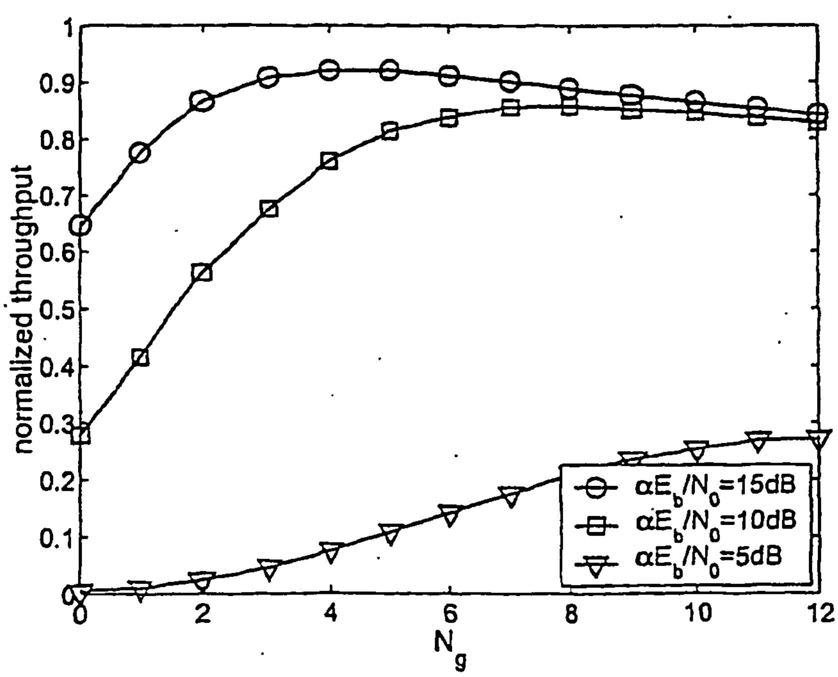
1
0.9
0.8
0.7
0.6
0.5
0.4
0.3
0.2
0.1
0
normalized throughput
0
2
4
6
8
10
12
N_g
αE_b/N_0=15dB
αE_b/N_0=10dB
αE_b/N_0=5dB

Fig. 14

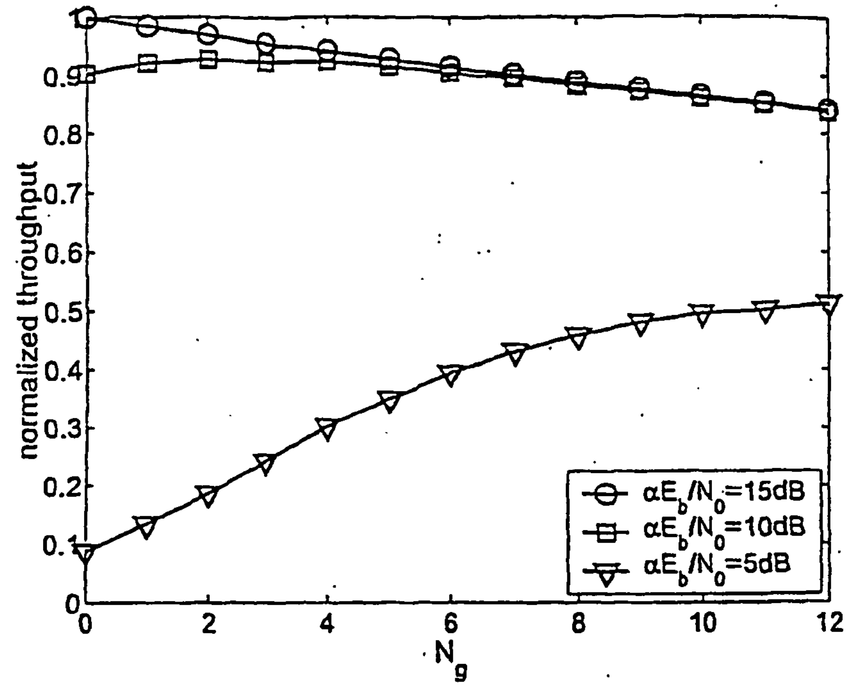
normalized throughput
N_g
αE_b/N_0=15dB
αE_b/N_0=10dB
αE_b/N_0=5dB
0
0.1
0.2
0.3
0.4
0.5
0.6
0.7
0.8
0.9
1
0
2
4
6
8
10
12

Fig. 15

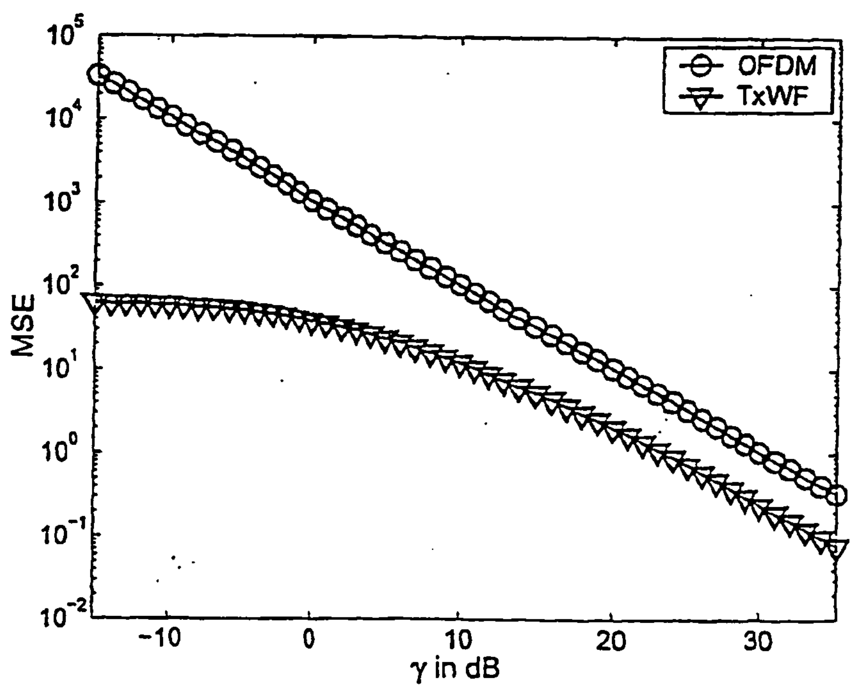
MSE
γ in dB
OFDM
TxWF
10^5
10^4
10^3
10^2
10^1
10^0
10^-1
10^-2
-10
0
10
20
30

Fig. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **J.A.C. BINGHAM.** Multicarrier Modulation for Data Transmission: An Idea Whose Time Has Come. *IEEE Communications Magazine,* May 1990, vol. 28 (5), 5-14
- **S. ABETA ; H. ATARASHI ; M. SAWAHASHI.** Forward Link Capacity of Coherent DS-CDMA and MC-CDMA Broadband Packet Wireless Access in a Multi-Cell Environment. *Proc. IEEE Vehicular Technology Conference,* 2000
- **R. VAN NEE ; R. PRASAD.** OFDM for Wireless Multimedia Communications. Artech House Publishers, 2000
- **N. AL-DHAHIR ; J.M. CIOFFI.** Optimum Finite-Length Equalization for Multicarrier Transceivers. *IEEE Transactions on Communications,* January 1996, vol. 44 (1), 56-64
- **Y SUN.** Bandwith-Efficient Wireless OFDM. *IEEE Journal of Selected Areas in Communications,* November 2001, vol. 19 (11), 2267-2278
- **H. SCHMIDT ; K. D. KAMMEYER.** Impulse Truncation for Wireless Communication OFDM Systems. *5th International OFDM Workshop,* September 2000
- **P. J. W. MELSA ; R. C. YOUNCE ; C. E. ROHRS.** Impulse Reponse Shortening for discrete Multitone Transceivers. *IEEE Transactions on Communications,* December 1996, vol. 44 (12), 1662-1672
- **S. TRAUTMANN ; T. KARP ; N. J. FLIEGE.** Frequency Domain Equalization of DMT/OFDM Systems with Insufficient Guard Interval. *Proc. IEEE Int. Conference on Communications,* April 2002, vol. 3, 1646-1650
- **G. G. RALEIGH ; J. M. CIOFFI.** Spatio-Temporal Coding for Wireless Communcation. *IEEE Transactions on Communications,* March 1998, vol. 46 (3), 357-366
- **R. ESMAILZADEH ; E. SOUROUR ; M. NAKAGAWA.** Prerake Diversity Combining in Time-Division Duplex CDMA Mobile Communications. *IEEE Transactions on Vehicular Technology,* May 1999, vol. 48 (3), 795-801
- **M. JOHAM ; W. UTSCHICK.** Downlink Processing for Mitigation of Intracell Interference in DS-CDMA Systems. *Proc. IEEE Int. Symposium on Spread Spectrum Techniques and Applications,* September 2000, vol. 1, 15-19
- **M. JOHAM ; K. KUSUME ; M. H.GZARA ; W. UTSCHICK ; J. A. NOSSEK.** Transmit Wiener Filter for the Downlink of the TDD DS-CDMA Systems. *Proc. IEEE Int. Symposium on Spread Spectrum Techniques and Applications,* 2002
- **Z. WANG ; G. B. GIANNAKIS.** Wireless Mutlicarrier Communications. *IEEE Signal Processing Magazine,* May 2000, vol. 17 (3), 29-48